(19)

Europäisches
Patentamt
European
Patent Office
Office européen
des brevets

(11) **EP 4 105 841 A1**

(12) **EUROPEAN PATENT APPLICATION**

(43) Date of publication:
**21.12.2022 Bulletin 2022/51**

(51) International Patent Classification (IPC):
**G06N 5/00** (2006.01) **G06N 20/00** (2019.01)
**G06N 7/00** (2006.01)

(21) Application number: **22159675.2**

(22) Date of filing: **02.03.2022**

(52) Cooperative Patent Classification (CPC):
**G06N 20/00; G06N 5/003;** G06N 7/005

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.06.2021 JP 2021101881**

(71) Applicant: **FUJITSU LIMITED**
**Kawasaki-shi, Kanagawa 211-8588 (JP)**

(72) Inventors:
• **Nomura, Kenji**
**Kawasaki-shi, Kanagawa, 211-8588 (JP)**
• **Matsuoka, Hidetoshi**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **OPTIMIZATION PROGRAM, OPTIMIZATION METHOD, AND INFORMATION PROCESSING APPARATUS**

(57)     An optimization program that causes at least one computer to execute a process, the process includes selecting a plurality of bits based on a constraint condition of an optimization problem for each of a plurality of first elements that are search targets of a solution for the optimization problem, from bit group information indicating whether each of a plurality of second elements included in each of the plurality of first elements are selected to be used for searching for the solution of the optimization problem; determining whether to accept the selected plurality of bits based on a certain condition; when the selected plurality of bits are accepted, inverting the plurality of bits in the bit group information; when the selected plurality of bits are not accepted, inverting the plurality of bits to return to a state before the determining in the bit group information; and searching for the solution of the optimization problem based on a selection status of each of the plurality of bits in the bit group information.

FIG. 5

EP 4 105 841 A1

**Description**

FIELD

The embodiments discussed herein are related to an optimization program, an optimization method, and an information processing apparatus.

BACKGROUND

An optimization process is known in one field of information processes. For example, there are an optimization problem and the like of obtaining a solution (optimum solution) by minimizing or maximizing resources and costs desirable in a case of performing a certain process, in the optimization process.

As a representative example of the optimization problem, a linear programming problem is known. The linear programming problem obtains a value of a variable that maximizes or minimizes an evaluation function represented by a linear sum of a plurality of continuous variables under a constraint condition represented by the linear sum, and is used in various fields such as a production plan of a product.

Many optimization problems are known in which variables are not continuous values but are discrete values. For example, a knapsack problem is known as a problem that takes a discrete value of an optimization problem.

The knapsack problem is a problem in which a knapsack having a certain capacity and a plurality of loads having values and capacities different from each other are given, some loads are packed in the knapsack within a range not exceeding the capacity of the knapsack, and a combination having a maximum total value is obtained as an optimum solution.

Japanese Laid-open Patent Publication No. 2016-103282 and Japanese Laid-open Patent Publication No. 2019-016077 are disclosed as related art.

SUMMARY

[TECHNICAL PROBLEMS]

Meanwhile, in the knapsack problem, in a case where the loads having different values are put in and taken out the knapsack so as to obtain the optimum solution, when a new load is put in instead of the high-value load put in the knapsack first, the value significantly deteriorates. As a result, in a case where the optimum solution is searched in a state in which the high-value load put in the knapsack is left as it is, it may be difficult to reach the optimum solution, due to a local solution.

By contrast, in a case where a criterion for determining whether to newly accept a load is made stricter, it takes time to reach the optimum solution while being captured in the local solution, and the time to reach the optimum solution becomes longer. On the other hand, in a case where the criterion for determining whether to accept a load to be put in a knapsack is set to be low, the solution largely deviates from the original solution and diverges.

According to an aspect, there is provided an optimization program, an optimization method, and an information processing apparatus capable of reducing a time taken to reach an optimum solution.

[SOLUTION TO PROBLEM]

According to an aspect of the embodiments, an optimization program that causes at least one computer to execute a process, the process includes selecting a plurality of bits based on a constraint condition of an optimization problem for each of a plurality of first elements that are search targets of a solution for the optimization problem, from bit group information indicating whether each of a plurality of second elements included in each of the plurality of first elements are selected to be used for searching for the solution of the optimization problem; determining whether to accept the selected plurality of bits based on a certain condition; when the selected plurality of bits are accepted, inverting the plurality of bits in the bit group information; when the selected plurality of bits are not accepted, inverting the plurality of bits to return to a state before the determining in the bit group information; and searching for the solution of the optimization problem based on a selection status of each of the plurality of bits in the bit group information.

[ADVANTAGEOUS EFFECTS OF INVENTION]

According to an embodiment, it is possible to reduce a time taken to reach an optimum solution.

BRIEF DESCRIPTION OF DRAWINGS

FIG. 1 is a diagram describing an overview of a 0-1 knapsack problem according to Reference Technique 1;
FIG. 2 is a diagram schematically describing a method of searching for an optimum solution for the 0-1 knapsack problem according to Reference Technique 1;
FIG. 3 is a flowchart illustrating a flow of processes in the 0-1 knapsack problem according to Reference Technique 1;
FIG. 4 is a diagram illustrating a relationship between a value and the number of times of bit inversion in the 0-1 knapsack problem according to Reference Technique 1;
FIG. 5 is a diagram describing an overview of a knapsack derivation problem according to Reference Technique 2;
FIG. 6 is a diagram schematically describing a method of searching for an optimum solution for the knapsack derivation problem according to Reference Technique 2;
FIG. 7 is a diagram illustrating a relationship between a value and the number of times of bit inversion in the knapsack derivation problem according to Reference Technique 2;
FIG. 8 is a diagram describing an overview of an integer carry problem according to Reference Technique 3;
FIG. 9 is a diagram schematically describing a method of searching for an optimum solution for the integer carry problem according to Reference Technique 3;
FIG. 10 is a flowchart illustrating a flow of processes in the integer carry problem according to Reference Technique 3;
FIG. 11 is a diagram illustrating a relationship between a value and the number of times of bit inversion in the integer carry problem according to Reference Technique 3;
FIG. 12 is a flowchart illustrating a flow of processes for solving a task of the 0-1 knapsack problem according to Reference Technique 1;
FIG. 13 is a diagram for describing an overview for solving the task of the 0-1 knapsack problem according to Reference Technique 1;
FIG. 14 is a diagram describing bit group information and multi-bit inversion;
FIG. 15 is a diagram for describing an overview for solving a task of the knapsack derivation problem according to Reference Technique 2;
FIG. 16 is a diagram for describing an overview for solving a task of the integer carry problem according to Reference Technique 3;
FIG. 17 is a diagram for describing an overview of processes for solving the task of the integer carry problem according to Reference Technique 3;
FIG. 18 is a functional block diagram illustrating an example of a functional configuration of an information processing apparatus according to an embodiment;
FIG. 19 is a diagram describing an overview of constraint satisfaction rate information;
FIG. 20 is a diagram describing an overview of the bit group information;
FIG. 21 is a flowchart illustrating a flow of processes according to the embodiment;
FIG. 22 is a flowchart illustrating another flow of the processes according to the embodiment;
FIG. 23 is a flowchart illustrating still another flow of the processes according to the embodiment;
FIG. 24 is a flowchart illustrating still another flow of the processes according to the embodiment;
FIG. 25 is a diagram describing an optimum solution search; and
FIG. 26 is a diagram describing an example of a hardware configuration.

DESCRIPTION OF EMBODIMENTS

Hereinafter, embodiments of an optimization program, an optimization method, and an information processing apparatus disclosed herein will be described in detail based on the drawings. The embodiments are not intended to limit the scope of the present disclosure. Each embodiment may be combined as appropriate within a scope without contradiction.

[Overview of 0-1 Knapsack Problem of Reference Technique 1]

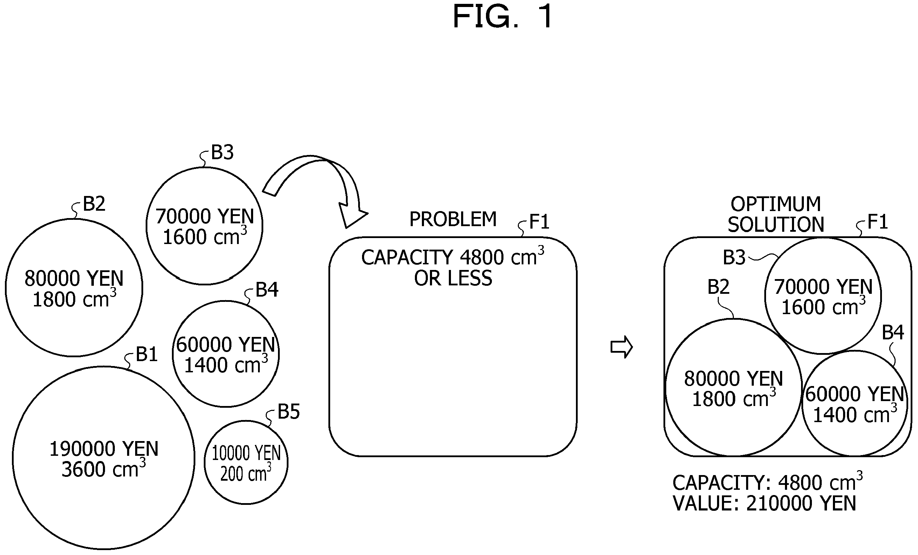

First, a 0-1 knapsack problem according to Reference Technique 1 will be described. FIG. 1 is a diagram describing an overview of the 0-1 knapsack problem according to Reference Technique 1.

In the knapsack problem, a knapsack F1 having a certain capacity and n types of loads are given. The knapsack problem is a problem in which some loads are packed in the knapsack F1 within a range not exceeding the capacity of the knapsack F1, and a combination that maximizes a total value of the loads is obtained as an optimum solution. For example, the knapsack problem is classified into a problem of a 0-1 integer programming problem among integer programming problems, and a solution is either 0 or 1 as follows.

$$x_i = \begin{cases} 1 \cdots & \text{load is packed} \\ 0 \cdots & \text{load is not packed} \end{cases} \qquad \text{... Formula (1)}$$

When a plurality of loads are packed in the knapsack F1, a case where each of the plurality of loads has a capacity and the knapsack F1 has a limit on a capacity (b) will be described. At this time, when the number of loads is n, the capacity of the load is $a_i$, a value is $c_i$ yen, and the capacity of the knapsack is b cm$^3$, the knapsack problem may be formulated (2) as follows.

$$\text{objective function:} \sum_{i=1}^{n} c_i x_i \rightarrow \max$$

$$\text{constraint condition:} \sum_{i=1}^{n} a_i x_i \leq b \ \text{capacity constraint}$$

$$x_1, x_2 \cdots x_n \in \leq \{0,1\} \qquad \text{... Formula (2)}$$

For example, in the knapsack problem, a combination in which some loads ($a_i x_i$) are packed in the knapsack F1 and a total value ($c_i x_i$) of the loads is maximized is obtained as an optimum solution so as to satisfy Formula (2).

For example, as illustrated in FIG. 1, in the knapsack problem, the knapsack F1 having a capacity of 4800 cm$^3$ and a plurality of loads B1 to loads B5 having values and capacities different from each other are given. As illustrated in FIG. 1, in the knapsack problem, an optimum solution is obtained by packing a combination of the load B2, the load B3, and the load B4 among the plurality of loads B1 to load B5 into the knapsack F1 so as to satisfy Formula (2). In this case, the optimum solution (combination) illustrated in FIG. 1 has a capacity of 4800 cm$^3$ and a value of 210000 yen.

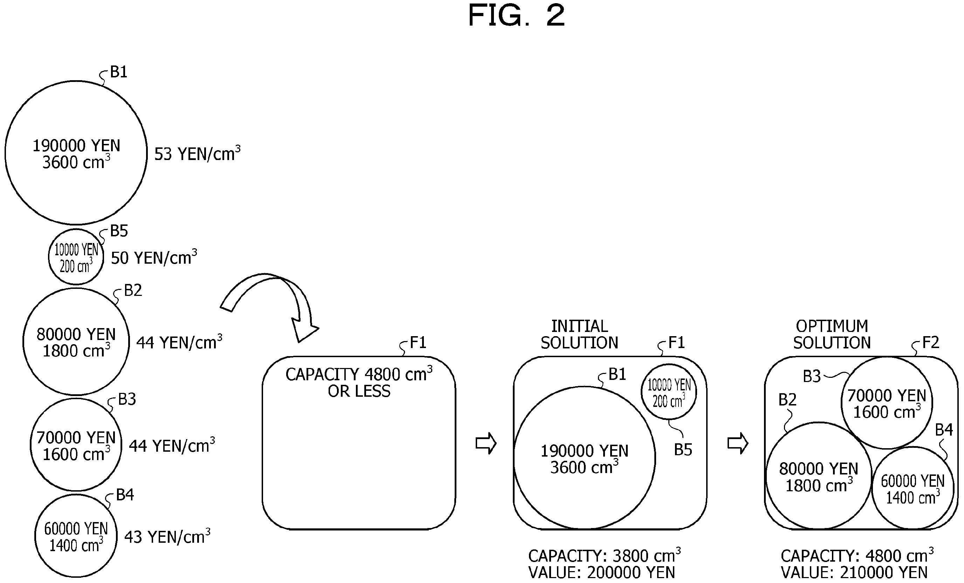

Next, a method of searching for an optimum solution for the 0-1 knapsack problem according to Reference Technique 1 will be described. FIG. 2 is a diagram schematically describing a method of searching for an optimum solution for the 0-1 knapsack problem according to Reference Technique 1.

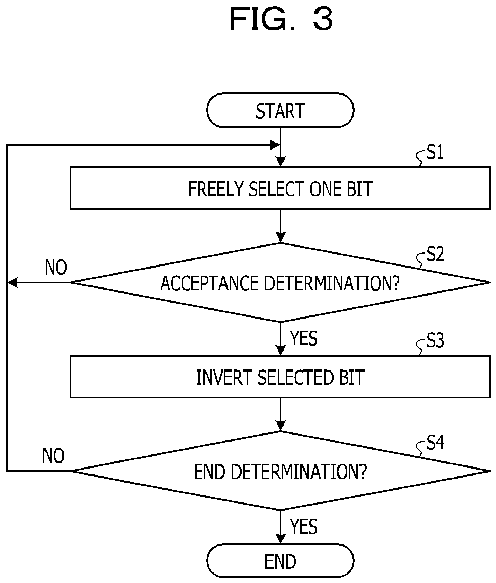

As illustrated in FIG. 2, first, in Reference Technique 1, an initial solution is obtained by arranging the loads having high values per capacity in order, for each of the plurality of loads B1 to B5, and packing the loads up to an upper limit of the capacity (b) of the knapsack F1. For example, as illustrated in FIG. 2, in Reference Technique 1, the loads are arranged in order of the load B1 (53 yen/cm$^3$), the load B5 (50 yen/cm$^3$), the load B2 (44 yen/cm$^3$), the load B3 (44 yen/cm$^3$), and the load B4 (43 yen/cm$^3$). After that, in Reference Technique 1, the initial solution is obtained by packing the loads up to the upper limit of the capacity (b) of the knapsack F1, in descending order of value per capacity, for each of the plurality of loads B1 to B5. As illustrated in FIG. 3, in Reference Technique 1, the load B1 and the load B5 are obtained as the initial solution (capacity: 3800 cm$^3$, and value: 200000 yen).

Subsequently, in Reference Technique 1, an optimum solution is obtained by repeating putting in and taking out the load B1 to the load B5 to and from the knapsack F1. As illustrated in FIG. 2, in Reference Technique 1, the load B2, the load B3, and the load B4 are obtained as the optimum solution (capacity: 4800 cm$^3$, and value: 210000 yen).

Next, a flow of processes in the 0-1 knapsack problem according to Reference Technique 1 will be described. FIG. 3 is a flowchart illustrating the flow of the processes in the 0-1 knapsack problem according to Reference Technique 1.

As illustrated in FIG. 3, first, in Reference Technique 1, one bit is freely selected (step S1). For example, as illustrated in FIG. 2 described above, in Reference Technique 1, loads to be packed into the knapsack F1 are freely selected among the loads B1 to the load B5.

Subsequently, in Reference Technique 1, acceptance determination of the bit freely selected is performed (step S2). For example, in Reference Technique 1, the acceptance determination is performed whether or not to accept inversion of the bit selected in step S1 from a current state. Details of the acceptance determination will be described below. In a case where the acceptance determination of the freely selected bit is permitted (Yes in step S2), the process proceeds to step S3, in Reference Technique 1. By contrast, in a case where the acceptance determination of the freely selected bit is rejected (No in step S2), the process returns to step S1, in Reference Technique 1.

At step S3, the selected bit is inverted, in Reference Technique 1. For example, as illustrated in FIG. 2, in Reference Technique 1, a state of the current bit selected in step S1 is inverted. For example, as illustrated in FIG. 2, in Reference Technique 1, since the load B1 is put in the knapsack F1 as an initial value, for example, a bit state is "1", the bit of the load B1 is inverted from "1" to "0" when acceptance is permitted in step S2. On the other hand, as illustrated in FIG. 2, in Reference Technique 1, in a case where the acceptance is rejected in step S2, the bit of the load B1 in the knapsack F1 is maintained as "1". In Reference Technique 1, in a case where the load B1 is not put in the knapsack F1, for example, in a case where the bit state is "0", when the acceptance is permitted in step S2, the bit of the load B1 is inverted from "0" to "1", and when the acceptance is rejected, the bit of the load B1 is maintained as "0".

Subsequently, in Reference Technique 1, end determination is performed (step S4), the present process is ended in a case where a result of the end determination is permitted (Yes in step S4), and the process returns to step S1 in a case where the result of the end determination is rejected (No in step S4). The end determination is any one or more of determination of whether or not an optimum solution (for example, a best solution) is obtained among a plurality of solutions obtained in a plurality of processes in the past, determination of whether or not the number of preset processes is reached, and determination of whether or not a preset time period set elapses.

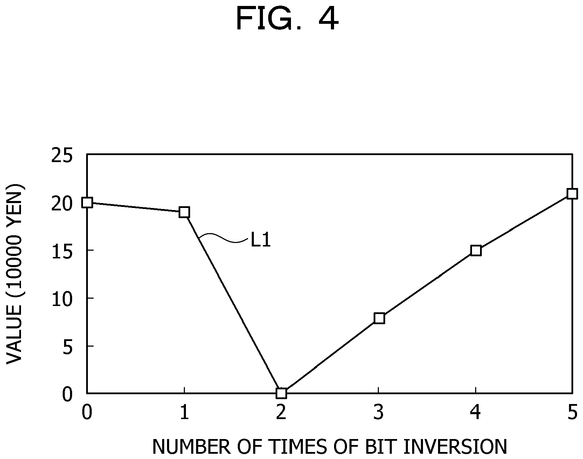

Next, a task of the 0-1 knapsack problem according to Reference Technique 1 will be described. FIG. 4 is a diagram illustrating a relationship between a value and the number of times of bit inversion in the 0-1 knapsack problem according to Reference Technique 1. FIG. 4 has a vertical axis indicating a value (10000 yen) and a horizontal axis indicating the number of times of bit inversion. In FIG. 4, a polygonal line L1 indicates a relationship between the value and the number of times of bit inversion.

As indicated by the polygonal line L1 in FIG. 4, first, in Reference Technique 1, in order to reach an optimum solution (210000 yen), the load B1 of 3600 $cm^3$ and the load B5 of 200 $cm^3$ are taken out from the knapsack F1. After that, in Reference Technique 1, it is desirable to newly put the load B2 of 1800 $cm^3$, the load B3 of 1600 $cm^3$, and the load B4 of 1400 $cm^3$ in the knapsack F1. In this case, as indicated by the polygonal line L1 in FIG. 4, in Reference Technique 1, when the load B1 of 3600 $cm^3$ and the load B5 of 200 $cm^3$ are taken out from the knapsack F1, a value deteriorates most. For example, in Reference Technique 1, in a case where a high-value load such as the load B1 of 3600 $cm^3$ is taken out from the knapsack F1, the value significantly deteriorates.

For this reason, in Reference Technique 1, it is difficult to exceed a deep valley of energy of the maximization problem, and the optimum solution is not reached. For example, in Reference Technique 1, in a case where a criterion for the acceptance determination described above is set to be low, the solution largely deviates from the solution of the main body and diverges. Meanwhile, in a case where the criterion for the acceptance determination is set to be high, it is not possible to reach the optimum solution while being captured by a local solution (for example, the value of the load B1). The criterion is a current value (current solution) or the like. For example, in Reference Technique 1, in a case where the criterion for the acceptance determination is set to be high, the current value (current solution) is accepted when the current value (current solution) is higher than the criterion for the acceptance determination. According to Reference Technique 1, in a case where the criterion for acceptance determination is set to be low, the current value (current solution) is accepted even when the value is equal to or more than a predetermined range from the criterion (for example, equal to or more than 10% from the criterion).

[Knapsack Derivation Problem of Reference Technique 2]

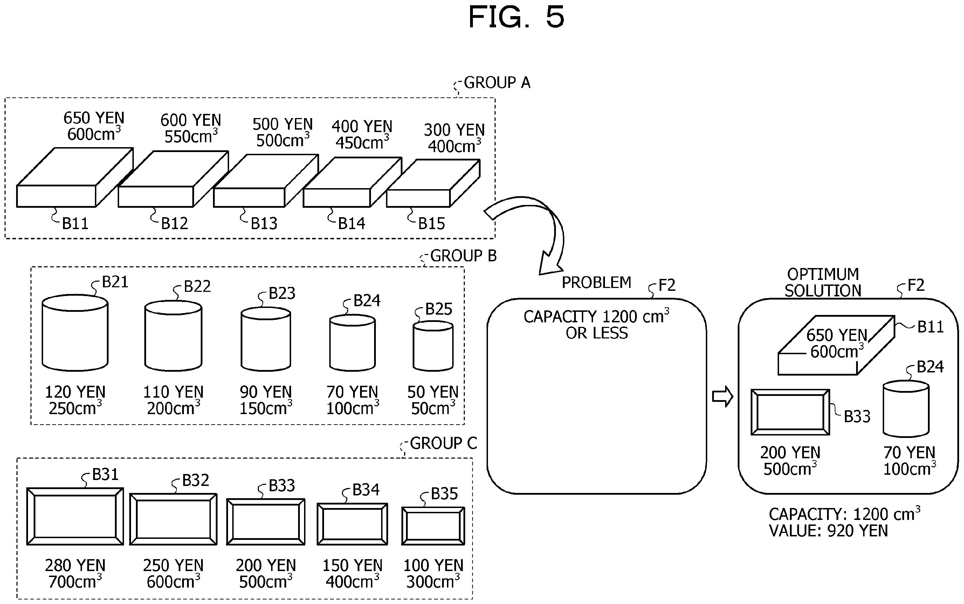

Next, a knapsack derivation problem will be described. FIG. 5 is a diagram describing an overview of the knapsack derivation problem according to Reference Technique 2.

As illustrated in FIG. 5, Reference Technique 2 is a problem in which loads are selected one by one from each of a plurality of groups in a knapsack F2 having a certain capacity, and a combination in which a total value of the loads selected from each group is maximized is obtained as an optimum solution. For example, as illustrated in FIG. 5, Reference Technique 2 is a problem in which the combination that maximizes the total value is obtained as the optimum solution by selecting and packing loads one by one from each of a group A (lunchbox), a group B (beverage), and a group C (dessert) into the knapsack F2 having a certain capacity (b).

According to Reference Technique 2, a description will be given of a case where each load of the group A (lunchbox), the group B (beverage), and the group C (dessert) has a capacity, and the knapsack F2 has a limit on the capacity (b). At this time, when one load is selected from each of the group A (lunchbox), the group B (beverage), and the group C (dessert), the capacity of the load is set to $a_i$, a value of the load is set to $c_i$ yen, and the capacity of the knapsack F1 is set to b $cm^3$, the knapsack derivation problem may be formulated (3) as follows.

$$\text{objective function: } \sum_{i=1}^{n} c_i x_i \rightarrow max$$

$$\text{constraint condition I: } \sum_{i=1}^{n} a_i x_i \leq b \text{ capacity constraint}$$

$$\text{constraint condition II: } \sum_{i=1}^{n_\alpha} x_i = 1 \text{ lunchbox count constraint}$$

$$\text{constraint condition III: } \sum_{n_\alpha+1}^{n_\beta} x_i = 1 \text{ beverage count constraint}$$

$$\text{constraint condition IV: } \sum_{n_\beta+1}^{n} x_i = 1 \text{ dessert count constraint}$$

$$x_1, x_2 \cdots x_n \in \leq \{0,1\} \qquad \ldots$$

Formula (3)

For example, in Reference Technique 2, loads are selected one by one from each of the group A (lunchbox), the group B (beverage), and the group C (dessert) so as to satisfy Formula (3), and a combination in which a total value of the loads selected from each of the group A (lunchbox), the group B (beverage), and the group C (dessert) is maximized is obtained as an optimum solution.

For example, as illustrated in FIG. 5, in Reference Technique 2, the knapsack F2 having a capacity of 1200 cm$^3$, and each of the group A (lunchbox), the group B (beverage), and the group C (dessert) which are grouped in advance by a plurality of loads having values and capacities different from each other are given. As illustrated in FIG. 5, in Reference Technique 2, the loads are selected one by one from each of the group A (lunchbox), the group B (beverage), and the group C (dessert). Subsequently, as illustrated in FIG. 5, in Reference Technique 2, a combination that maximizes the total value is obtained as the optimum solution by packing the loads selected from each of the group A (lunchbox), the group B (beverage), and the group C (dessert) into the knapsack F2 so as to satisfy Formula (3). In this case, in the optimization illustrated in FIG. 5, the capacity is 1200 cm$^3$ and the value is 920 yen.

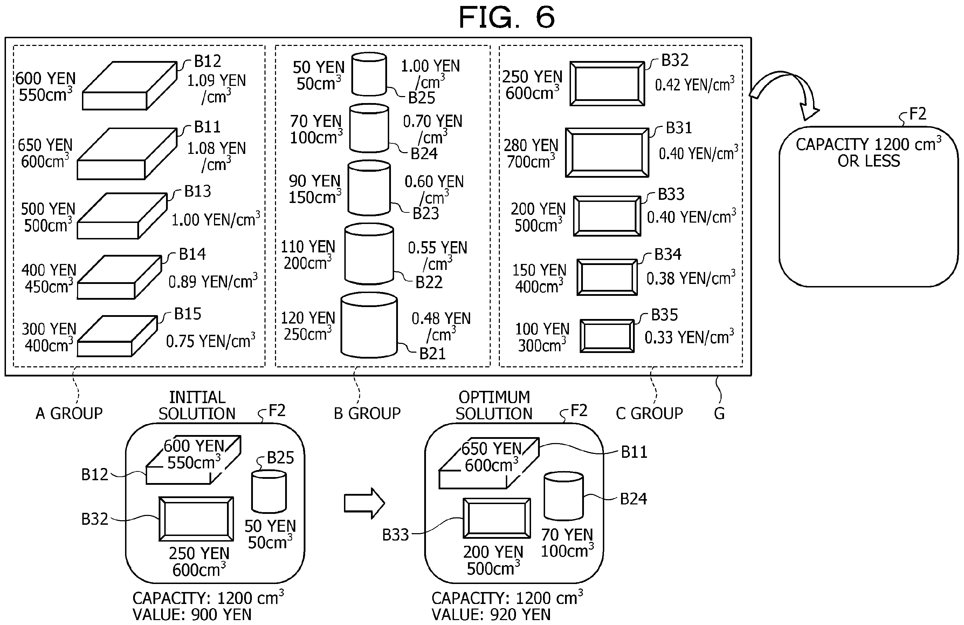

Next, a method of searching for the optimum solution for the knapsack derivation problem according to Reference Technique 2 will be described. FIG. 6 is a diagram schematically describing the method of searching for the optimum solution for the knapsack derivation problem according to Reference Technique 2.

As illustrated in FIG. 6, first, in Reference Technique 2, for each of a plurality of loads stored in each of the group A (lunchbox), the group B (beverage), and the group C (dessert), loads having high values per capacity are arranged in order. After that, in Reference Technique 2, each of the group A (lunchbox), the group B (beverage), and the group C (dessert) is packed in the knapsack F2 in descending order of value so as to obtain an initial solution. For example, as illustrated in FIG. 6, in Reference Technique 2, in the group A (lunchbox), a lunchbox B12 (1.09 yen/cm$^3$), a lunchbox B11 (1.08 yen/cm$^3$), a lunchbox B13 (1.00 yen/cm$^3$), a lunchbox B14 (0.89 yen/cm$^3$), and a lunchbox B15 (0.75 yen/cm$^3$) are arranged in this order. After that, in Reference Technique 2, each of the group A (lunchbox), the group B (beverage), and the group C (dessert) is packed in the knapsack F2 in descending order of value so as to obtain the initial solution. As illustrated in FIG. 6, in Reference Technique 2, the lunchbox B12, a beverage B25, and a dessert B32 are obtained as the initial solution (capacity: 1200 cm$^3$, and value: 900 yen).

Subsequently, with Reference Technique 2, an optimum solution is obtained by repeatedly putting in and taking out the loads of each of the group A (lunchbox), the group B (beverage), and the group C (dessert) to and from the knapsack F2. As illustrated in FIG. 6, in Reference Technique 2, the lunchbox B11, a beverage B24, and a dessert B33 are obtained as the optimum solution (capacity: 1200 cm$^3$, and value: 920 yen).

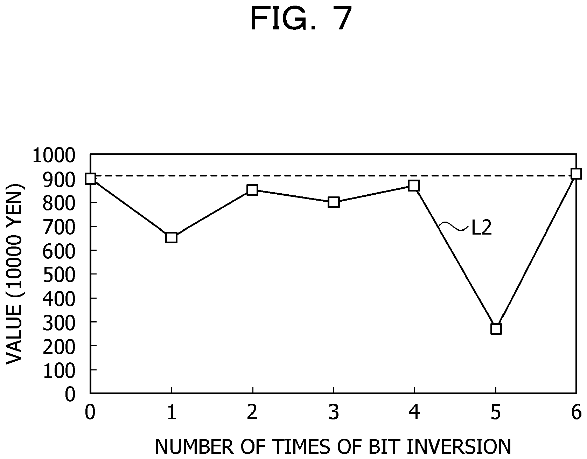

Next, a task of the knapsack derivation problem according to Reference Technique 2 will be described. FIG. 7 is a diagram illustrating a relationship between a value and the number of times of bit inversion in the knapsack derivation problem according to Reference Technique 2. FIG. 7 has a vertical axis indicating values (yen) and a horizontal axis indicating the number of times of bit inversion. In FIG. 7, a polygonal line L2 indicates the relationship between the value and the number of times of bit inversion.

As indicated by the polygonal line L2 in FIG. 7, in Reference Technique 2, first, in order to reach an optimum solution (920 yen), it is desirable to take out the lunchbox B12 of 550 cm$^3$, the beverage B25 of 50 cm$^3$, and the dessert B32 of 600 cm$^3$ from the knapsack F2. After that, in Reference Technique 2, it is desirable to put the lunchbox B11 of 600 cm$^3$, the beverage B24 of 100 cm$^3$, and the dessert B33 of 500 cm$^3$ into the knapsack F2. In this case, as indicated by the polygonal line L2 in FIG. 7, in Reference Technique 2, when the lunchbox B12 of 550 cm$^3$, the beverage B25 of 50 cm$^3$, and the dessert B32 of 600 cm$^3$ are taken out from the knapsack F2, a value deteriorates. For example, in Reference Technique 2, in a case where a high-value load such as the lunchbox B12 of 550 cm$^3$ is taken out from the knapsack F2, the value significantly deteriorates.

For this reason, in Reference Technique 2, it is difficult to exceed a deep valley of energy of the maximization problem, and the optimum solution is not reached.

[Integer Carry Problem of Reference Technique 3]

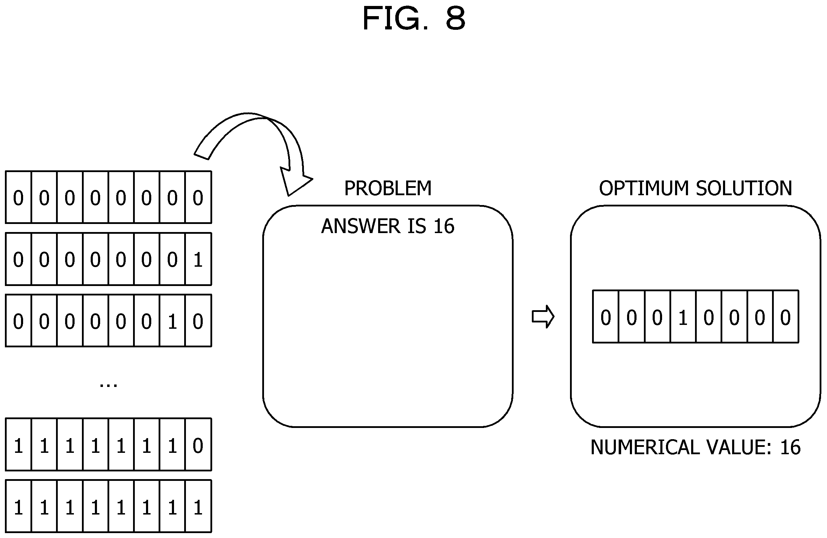

Next, Reference technique 3 will be described. FIG. 8 is a diagram describing an overview of an integer carry problem according to Reference Technique 3.

As illustrated in FIG. 8, Reference Technique 3 is an optimization problem in which, in a bit array with which a natural number is represented by a plurality of bits, a combination of bits with which an answer is 16 or a value of Formula (4) is minimized is obtained as an optimum solution. For example, as illustrated in FIG. 8, in Reference Technique 3, in a bit array with which a natural number is represented by a plurality of bits, a combination "00010000" of bits with which answer is "16" is the optimum solution.

$$\text{objective function: } \left| \sum_{i=1}^{n} c_i x_i - 16 \right| \to min$$

$$\text{constraint condition: } x_1, x_2 \cdots x_n \in \leq \{0,1\} \qquad \text{... Formula (4)}$$

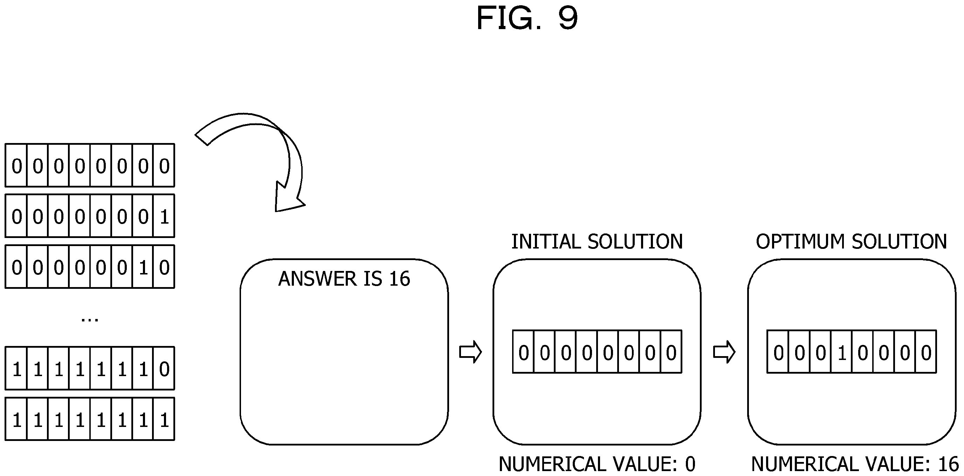

Next, a method of searching for an optimum solution in a three-integer carry problem according to Reference Technique will be described. FIG. 9 is a diagram schematically describing a method of searching for an optimum solution for an integer carry problem according to Reference Technique 3.

As illustrated in FIG. 9, first, in Reference Technique 3, an initial solution is obtained by setting all bits of a bit array representing a natural number to "0". After that, in Reference Technique 3, one bit is freely selected and inverted repeatedly so as to search for a combination of bits having an answer of 16. After that, in Reference Technique 3, "00010000" with the answer of "16" is obtained as an optimum solution.

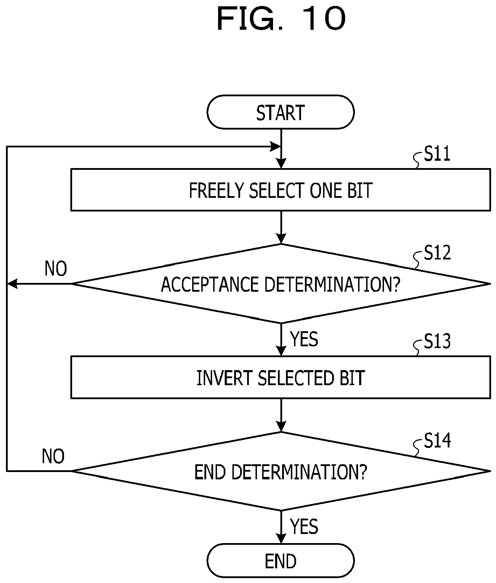

Next, a flow of processes in the integer carry problem according to Reference Technique 3 will be described. FIG. 10 is a flowchart illustrating the flow of the processes in the integer carry problem according to Reference Technique 3.

As illustrated in FIG. 10, first, in Reference Technique 3, one bit is freely selected for a bit array with which a natural number is represented (step S11), and acceptance determination of the one bit freely selected is performed (step S12). For example, in Reference Technique 3, the acceptance determination is performed whether or not to accept inversion of a current state of one bit freely selected in step S11. In a case where the acceptance determination of the freely selected bit is permitted (Yes in step S12), in Reference Technique 3, the process proceeds to step S13. By contrast, in a case where the acceptance determination of the freely selected bit is rejected (No in step S12), the process returns to step S11, in Reference Technique 3.

At step S13, the selected bit is inverted, in Reference Technique 3. For example, in Reference Technique 3, one selected bit freely selected in step S11 is inverted. For example, in Reference Technique 3, in a case where a bit state of the bit freely selected in step S11 is "0", the bit state is inverted to "1".

Subsequently, in Reference Technique 3, end determination is performed (step S14), the present process is ended in a case where a result of the end determination is permitted (Yes in step S14), and the process returns to step S11 in a case where the result of the end determination is rejected (No in step S14).

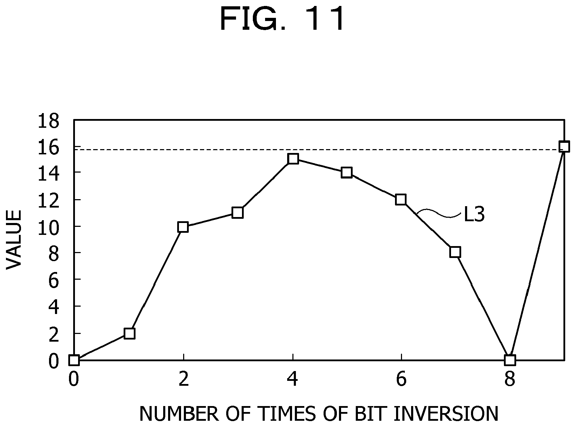

Next, a task of the integer carry problem according to Reference Technique 3 will be described. FIG. 11 is a diagram illustrating a relationship between a value and the number of times of bit inversion in the integer carry problem according to Reference Technique 3. FIG. 11 has a vertical axis indicating values and a horizontal axis indicating the number of times of bit inversion. In FIG. 11, a polygonal line L3 indicates the relationship between the value and the number of times of bit inversion.

As indicated by the polygonal line L3 in FIG. 11, in Reference Technique 3, the fifth bit may be "1" in the first bit selection, and any one of the first to fourth bits is "1" with a probability of 80%. For this reason, in Reference Technique 3, since once any one of the first to fourth bits becomes "1", and then a solution approaches an optimum solution, it is highly likely that the unselected bit also becomes "1". In this case, in Reference Technique 3, in order to reach the optimum solution from a state ("00001111") in which all of the first to fourth bits are "1", the fifth bit is desirable to be newly inverted from "0" to "1" by inverting all the four bits of the first to fourth bits from "1" to "0" ("0000000"). In this case, in Reference Technique 3, as indicated by the polygonal line L3 in FIG. 11, when all of the four bits of the first to fourth bits are inverted from "1" to "0", the value deteriorates. For example, in Reference Technique 3, when the fourth bit is taken out, the value significantly deteriorates. Accordingly, in Reference Technique 3, it is difficult to exceed a deep mountain or valley of energy of the minimization problem, and the optimum solution is not reached.

[Method for Solving Each Task of Reference Technique 1 to Reference Technique 3]

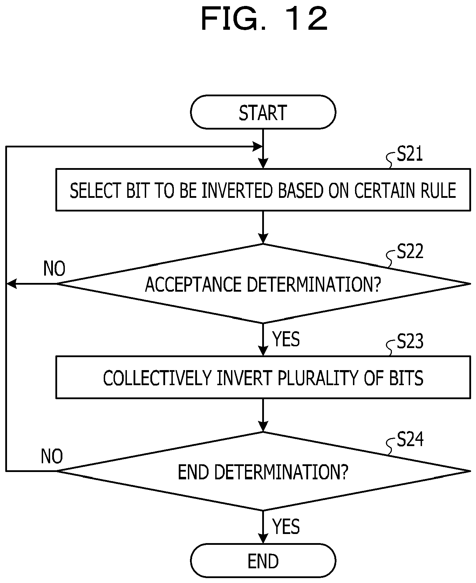

Next, a method for solving each task of Reference Techniques 1 to 3 described above, which is executed by the information processing apparatus 10 according to the present embodiment, will be described. First, a method for solving a task of the 0-1 knapsack problem according to Reference Technique 1 will be described. FIG. 12 is a flowchart illustrating a flow of processes for solving the task of the 0-1 knapsack problem according to Reference Technique 1.
As illustrated in FIG. 12, the information processing apparatus 10 selects a plurality of bits inverted based on a certain rule (step S21), and collectively evaluates the plurality of bits selected based on the certain rule to perform acceptance determination (step S22). The certain rule will be described below. In a case where the plurality of bits selected based on the certain rule are collectively evaluated and the acceptance determination is permitted (Yes in step S22), the information processing apparatus 10 proceeds to step S23. By contrast, in a case where the plurality of bits selected based on the certain rule are collectively evaluated and the acceptance determination is rejected (No in step S22), the information processing apparatus 10 returns to step S21. In this case, the information processing apparatus 10 maintains states of the plurality of bits selected based on the certain rule in the states before the acceptance determination. For example, the information processing apparatus 10 does not invert the bit states of the plurality of bits selected based on the certain rule, and maintains the bit states of the plurality of bits.
At step S23, the information processing apparatus 10 collectively inverts the plurality of bits selected based on the certain rule (step S23). In this case, the information processing apparatus 10 updates a value obtained by collectively inverting the plurality of bits selected based on the certain rule as a solution for one process (one set) of a flow of a series of processes in steps S21 to S23.
Subsequently, the information processing apparatus 10 performs end determination (step S24), and ends the present process in a case where a result of the end determination is permitted (Yes in step S24), and returns to step S21 in a case where the result of the end determination is rejected (No in step S24).

[Method for Task of Reference Technique 1]

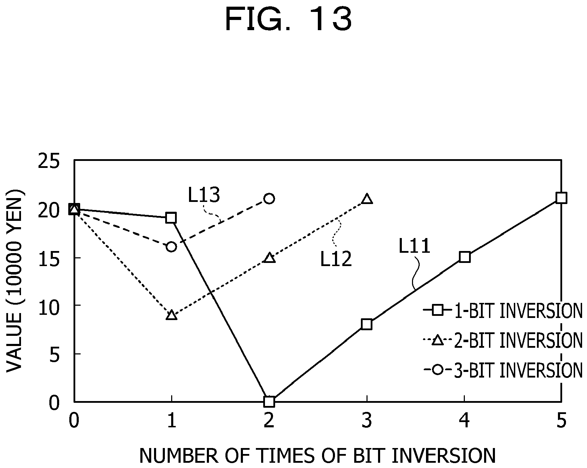

Next, an overview for solving a task of the 0-1 knapsack problem according to Reference Technique 1 described in the flow in FIG. 12 will be described. FIG. 13 is a diagram for describing the overview for solving the task of the 0-1 knapsack problem according to Reference Technique 1. FIG. 13 has a vertical axis indicating a value (10000 yen) and a horizontal axis indicating the number of times of bit inversion. In FIG. 13, a polygonal line L11 illustrates a relationship between a value and the number of times of bit inversion in a case where a bit (1 bit) is selected based on a rule in related art as a certain rule. In FIG. 13, a polygonal line L12 illustrates a relationship between a value and the number of times of bit inversion in a case where a bit selected based on a certain rule is 2 bits. In FIG. 13, a polygonal line L13 illustrates a relationship between a value and the number of times of bit inversion in a case where a bit selected based on a certain rule is 3 bits.
As indicated by the polygonal line L11 and the polygonal line L12 in FIG. 13, in a case where the information processing apparatus 10 selects 2 bits in total one by one bit from each of bits for which the certain rule is currently in a state of "1" and "0", a valley of a value of the polygonal line L12 is shallower than a valley of a value of the polygonal line L11 (a value of -200000 at maximum in a case of the polygonal line L11 > a value of -110000 at maximum in a case of the polygonal line L12).
As indicated by the polygonal line L11 and the polygonal line L13 in FIG. 13, in a case where the information processing apparatus 10 selects 3 bits in total, at least one by one bit from each of the bits for which the certain rule is currently in a state of "1" and "0", a valley of a value of the polygonal line L13 is shallower than the valley of the value of the polygonal line L11 (the value of -200000 at maximum in a case of the polygonal line L11 > a value of -40000 at maximum in a case of the polygonal line L13).
In this manner, the information processing apparatus 10 may make the valley of energy (value) of the maximization problem shallow, by collectively evaluating the plurality of bits selected based on the certain rule.

[Method for Task of Reference Technique 2]

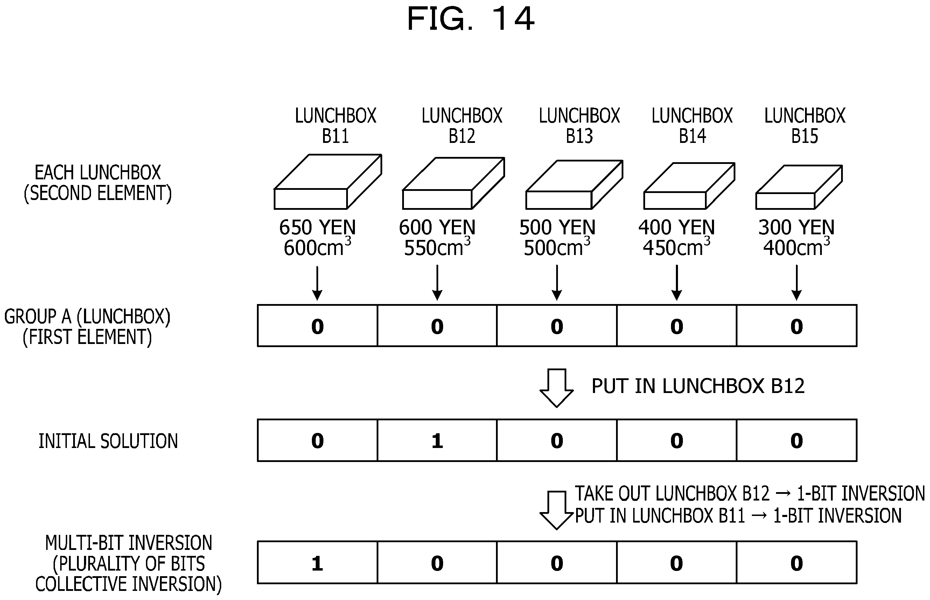

Next, a method for solving a task of the knapsack derivation problem according to Reference Technique 2, which is executed by the information processing apparatus 10, will be described. FIG. 14 is a diagram describing bit group information and multi-bit inversion. FIG. 14 describes the multi-bit inversion (plurality of bits collective inversion) when selecting the lunchbox B11 to the lunchbox B15 each of which is a second element included in the group A (lunchbox), which is one of first elements to be searched for the optimum solution in an optimization problem, of groups divided in advance. According to Reference Technique 2, multi-bit inversion in the same manner is performed on the group B (beverage) and the group C (dessert) which are the first elements.

As illustrated in FIG. 14, first, the information processing apparatus 10 selects, for example, the lunchbox B12 (load) having a high value from the group A of the groups divided in advance, which is the first element, and obtains an initial solution.

Subsequently, the information processing apparatus 10 selects a plurality of bits, based on a constraint condition of the optimization problem, from the bit group information related to bit information indicating whether or not the lunchbox B11 to the lunchbox B15 of each second element included in the group A of the first element are selected. For example, the information processing apparatus 10 performs the multi-bit inversion on the lunchbox B11 to the lunchbox B15 of each second element included in the group A of the first element by taking out the lunchbox B12 (from "1" to "0") and putting in the lunchbox B11 (from "0" to "1"). Details of the constraint condition for the optimization problem will be described below.

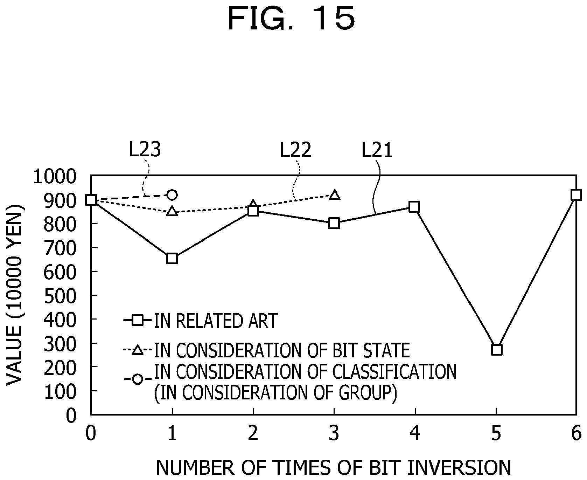

FIG. 15 is a diagram for describing an overview for solving a task of the knapsack derivation problem according to Reference Technique 2. FIG. 15 has a vertical axis indicating a value (10000 yen) and a horizontal axis indicating the number of times of bit inversion. In FIG. 15, a polygonal line L21 illustrates a relationship between a value and the number of times of bit inversion in a case where a bit (1 bit) is selected based on a rule in related art as a certain rule. In FIG. 15, a polygonal line L22 illustrates a relationship between a value and the number of times of bit inversion in a case where a group is selected as a certain rule and 2 bits are selected in consideration of bit states in the selected group. In FIG. 15, a polygonal line L23 illustrates a relationship between a value and the number of times of bit inversion in a case where a group is selected as a certain rule, and a bit selected in consideration of bit states in the selected group is 6 bits. For example, the polygonal line L23 indicates a relationship between a value and the number of times of bit inversion in a case of 6 bits in total including 2 bits as putting in and taking out lunchbox, 2 bits as putting in and taking out beverage, and 2 bits as putting in and taking out dessert. For example, the polygonal line L22 indicates that there are 2 bits as putting in and taking out any one type of lunchbox, beverage, and dessert, and the polygonal line L23 indicates that there are 3 types x 2 bits as putting in and taking out = 6 bits.

As indicated by the polygonal line L21 and the polygonal line L22 in FIG. 15, in Reference Technique 2, a group is selected as a certain rule. Subsequently, in Reference Technique 2, 2 bits in total, one by one bit from each of bits currently in the states of "1" and "0", are selected from the selected group. In this case, in Reference Technique 2, a valley of a value of the polygonal line L22 is shallower than a valley of a value of the polygonal line L21 (a value of -630 yen at maximum in a case of the polygonal line L21 > a value of -50 yen at maximum in a case of the polygonal line L22).

As indicated by the polygonal line L21 and the polygonal line L23 in FIG. 15, since only one bit is set to "1" in each of the three selected groups, the information processing apparatus 10 selects 6 bits in total. In this case, a valley of a value of the polygonal line L23 does not exist (a value of 630 yen at maximum in a case of the polygonal line L21 > a value of 0 yen at maximum in a case of the polygonal line L23).

In this manner, the information processing apparatus 10 selects a group (three groups of the group A, the group B, and the group C) as a certain rule, and selects 6 bits in total since only one bit of each load, which is a second element, is set to "1" in each group. According to Reference Technique 2, by collectively evaluating 6 bits, it is possible to remove a valley of energy (value) of the maximization problem.

[Method for Task of Reference Technique 3]

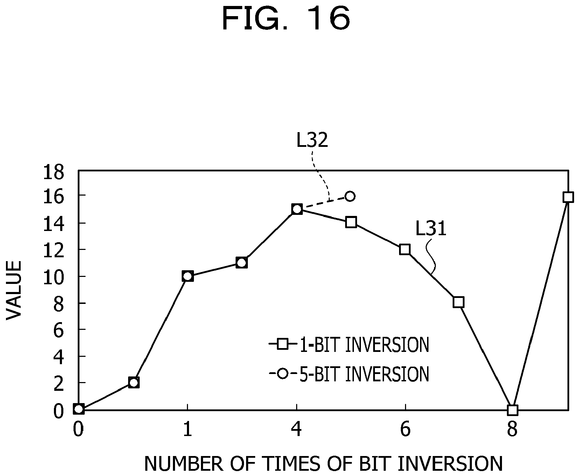

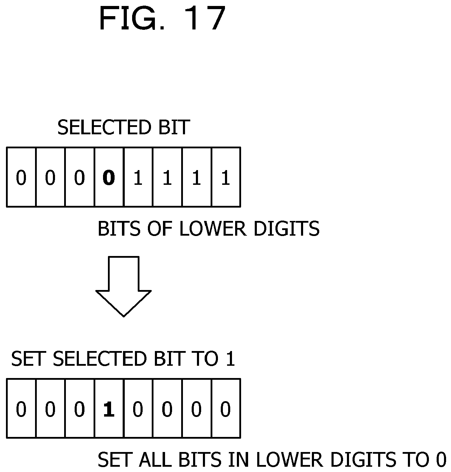

Next, a method for solving a task of the integer carry problem of Reference Technique 3, which is executed by the information processing apparatus 10, will be described. FIG. 16 is a diagram for describing an overview for solving the task of the integer carry problem according to Reference Technique 3. FIG. 17 is a diagram for describing an overview of a process of solving the task of the integer carry problem according to Reference Technique 3. FIG. 16 has a vertical axis indicating values and a horizontal axis indicating the number of times of bit inversion. In FIG. 16, a polygonal line L31 illustrates a relationship between a value and the number of times of bit inversion in a case where a bit (1 bit) is selected based on a rule in related art as a certain rule. In FIG. 16, a polygonal line L32 illustrates a relationship between a value and the number of times of bit inversion in a case where a group is selected as a certain rule, a certain bit in a state in which a current bit is "0" in the selected group is set to "1", and all bits corresponding to digits lower than the current bit are set to "0".

The information processing apparatus 10 selects a group as a certain rule. Subsequently, the information processing apparatus 10 sets a bit having the current bit in a state of "0" in the selected group to "1", and sets all bits corresponding to digits lower than the current bit to "0". For example, as illustrated in FIG. 17, the information processing apparatus 10 selects a group as a certain rule, sets a bit in a state in which the current bit is "0" in the selected group ("00001111") to "1", and sets all bits corresponding to digits lower than the current bit to "0" ("00010000"). In this case, as indicated by the polygonal line L31 and the polygonal line L32 in FIG. 16, a valley of a value of the polygonal line L32 is shallow (a value of -15 at maximum in a case of the polygonal line L31 > a value of 0 at maximum in a case of the polygonal line L32).

In this manner, in a case where the information processing apparatus 10 selects a group as a certain rule, sets a bit in a state in which the current bit is "0" in the selected group to "1", and sets all bits corresponding to digits lower than the current bit to "0", it is possible to make the valley of the energy (value) of the minimization problem shallow.

[Functional Configuration of Information Processing Apparatus]

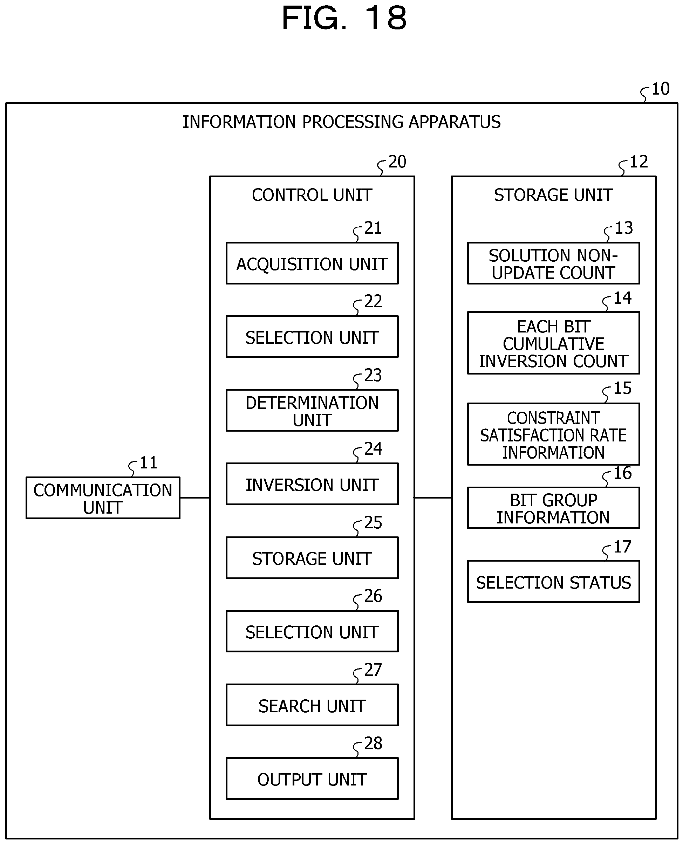

Next, the information processing apparatus that solves each task of Reference Techniques 1 to 3 described above will be described. FIG. 18 is a functional block diagram illustrating a functional configuration of the information processing apparatus 10 according to the embodiment. The information processing apparatus 10 illustrated in FIG. 18 selects a plurality of bits based on a certain rule under each of constraint conditions of Reference Techniques 1 to 3 by using an optimization apparatus such as an Ising machine, and performs acceptance determination for accepting bit inversion of the selected plurality of bits to search for an optimum solution. Accordingly, the information processing apparatus 10 may reduce a time taken to reach the optimum solution in the 0-1 knapsack problem, the knapsack derivation problem, the integer carry problem, and the like in each of Reference Techniques 1 to 3 described above.

As illustrated in FIG. 18, the information processing apparatus 10 includes a communication unit 11, a storage unit 12, and a control unit 20.

Under control of the control unit 20, the communication unit 11 communicates with another device (for example, a display apparatus, a server apparatus, or the like) via a communication cable or the like. For example, the communication unit 11 is realized by a communication interface coupled to a display apparatus, a network interface card (NIC) coupled to a communication network such as local area network (LAN), or the like.

For example, the storage unit 12 corresponds to a semiconductor memory element such as a random-access memory (RAM) or a flash memory, or a storage apparatus such as a hard disk drive (HDD). The storage unit 12 includes a solution non-update count 13, an each bit cumulative inversion count 14, constraint satisfaction rate information 15, bit group information 16, and a selection status 17.

The solution non-update count 13 stores the number of times a solution is not updated when an optimum solution for a combination is searched while a plurality of bits are inverted.

The each bit cumulative inversion count 14 stores a cumulative count of the number of times of selection of each bit in the plurality of bits which are second elements. For example, the each bit cumulative inversion count 14 stores an inversion frequency of the number of times of selection of each bit in the plurality of bits as the cumulative count.

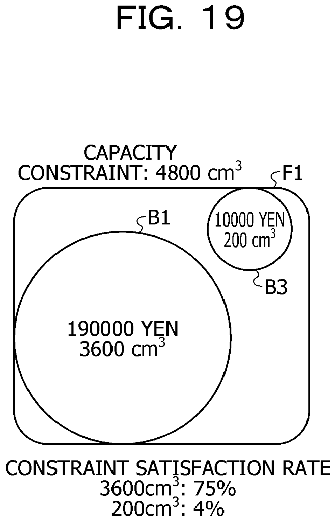

The constraint satisfaction rate information 15 stores a constraint satisfaction rate of a bit selected among the plurality of bits. FIG. 19 is a diagram describing an overview of the constraint satisfaction rate information 15. As illustrated in FIG. 18, the constraint satisfaction rate information 15 indicates a weight (capacity) occupied by a selected bit or load, for a certain capacity constraint. For example, as illustrated in FIG. 19, the constraint satisfaction rate information 15 stores a constraint satisfaction rate of each of the load B1 and the load B3 with respect to the knapsack F1 (3600 cm$^2$: 75% in a case of the load B1, and 200 cm$^2$: 4% in a case of the load B3).

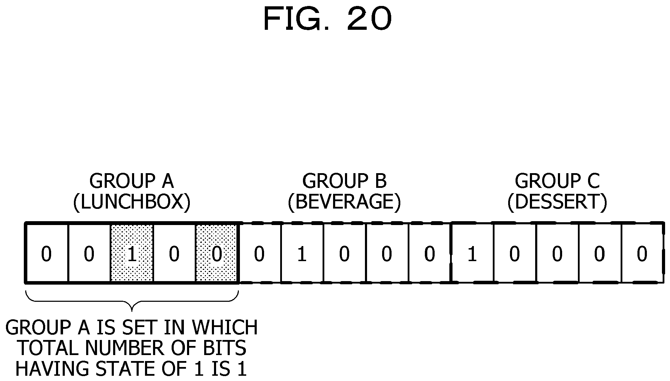

For each first element that is a search target for an optimum solution in an optimization problem, the bit group information 16 stores information on bit information indicating whether or not each second element included in each first element is selected. For example, the bit group information 16 stores information on a plurality of groups into which a plurality of bits are divided for each predetermined bit. FIG. 20 is a diagram describing an overview of the bit group information 16. As illustrated in FIG. 20, the bit group information 16 stores information on the plurality of groups (group A (lunchbox), group B (beverage), and group C (dessert)) into which the plurality of bits are divided for each predetermined bit. As illustrated in FIG. 19, each of the group A to the group C is a set of bits in which a total number of bits having identical states is defined in advance, under the constraint condition for optimization. For example, as illustrated in FIG. 20, each of the group A to the group C is a set in which a total number of bits having a bit state of "1" is "1".

The selection status 17 stores each bit information in the bit group information 16. For example, the selection status 17 stores a status of "1" or "0" of each bit of each of the group A to the group C.

The control unit 20 is a processing unit that controls the entire information processing apparatus 10, and may be realized by a central processing unit (CPU), a microprocessor unit (MPU), or the like, for example. The control unit 20 may be realized by a hard wired logic such as an application-specific integrated circuit (ASIC) or a field-programmable gate array (FPGA). The control unit 20 includes an acquisition unit 21, a selection unit 22, a determination unit 23, an inversion unit 24, a storage unit 25, a selection unit 26, a search unit 27, and an output unit 28. The acquisition unit 21, the selection unit 22, the determination unit 23, the inversion unit 24, the storage unit 25, the selection unit 26, the search unit 27, and the output unit 28 may be realized by an electronic circuit such as a processor, or may be realized as an example of a process executed by the processor.

The acquisition unit 21 acquires the solution non-update count 13 in a case where a solution is not updated when searching for an optimum solution of a combination while inverting a plurality of bits stored in a storage unit 12, and the each bit cumulative inversion count 14. The acquisition unit 21 acquires the constraint satisfaction rate information 15 of the bit when the plurality of bits stored in the storage unit 12 are preferentially selected, the bit group information 16 related to a plurality of groups into which the plurality of bits are divided for each predetermined bit, and current bit information of each bit.

For each first element that is a search target for the optimum solution in the optimization problem, the selection unit 22 selects a plurality of bits based on the constraint condition of the optimization problem, from the bit group information 16 related to the bit information indicating whether or not each second element included in each first element is selected. For example, the selection unit 22 selects, based on the solution non-update count 13 acquired by the acquisition unit 21, the bit group information 16, the current bit information of each bit, and at least one of the constraint satisfaction rate information 15 indicating a constraint satisfaction rate of the second element and the each bit cumulative inversion count 14, a plurality of bits in which a bit captured in a local solution is incorporated as a priority bit at least when searching for the optimum solution. The selection unit 22 freely selects one bit among the plurality of bits. For example, the selection unit 22 freely selects one bit for predetermined bits among the plurality of bits. The selection unit 22 selects an additional bit based on the bit group information 16 acquired by the acquisition unit 21.

The determination unit 23 executes acceptance determination for determining whether or not to accept the selection of the plurality of bits selected by the selection unit 22. For example, the determination unit 23 determines whether or not a value of the bit freely selected by the selection unit 22 is higher than a predetermined criterion value, and permits the acceptance determination to accept the bit freely selected by the selection unit 22 in a case where it is determined that the value of the bit is higher than the predetermined criterion value. The determination unit 23 performs selection determination of a plurality of bits based on a predetermined rule selected by the selection unit 22. The determination unit 23 performs collective acceptance determination of the plurality of bits. The determination unit 23 performs provisional acceptance determination of the priority bit. The determination unit 23 performs the provisional acceptance determination of the additional selected bit selected by the selection unit 22.

The inversion unit 24 inverts the bit freely selected by the selection unit 22. For example, the inversion unit 24 inverts the bit freely selected by the selection unit 22, for example, inverts "0" to "1". In a case where the determination unit 23 accepts the selection of the plurality of bits, the inversion unit 24 inverts the plurality of bits in the bit group information 16. By contrast, in a case where the determination unit 23 does not accept the selection of the plurality of bits, the inversion unit 24 returns the plurality of bits to a state before the acceptance determination in the bit group information 16.

The storage unit 25 resets the state of the solution non-update count 13 stored in the storage unit 12 to 0 times, and increments (+1) the number of times of inversion of the selected bit inverted by the inversion unit 24 from the current count of the each bit cumulative inversion count 14 stored in the storage unit 12. The storage unit 25 updates the solution non-update count 13 stored in the storage unit 12 by incrementing (+1) the current count.

The selection unit 26 selects any one of a one-step determination method and a two-step determination method.

Based on the selection status 17 of each bit information in the bit group information 16 stored in the storage unit 12, the search unit 27 searches for an optimum solution of the optimization problem. For example, each time the search unit 27 executes a series of processes including each process of a process of selecting a plurality of bits, a process of executing acceptance determination, and a process of inverting or returning the plurality of bits, the search unit 27 determines whether or not the bits satisfy a condition of the optimum solution of the optimization problem. For example, based on the selection status 17 stored in the storage unit 12, the search unit 27 determines whether or not an optimum solution may be obtained among a plurality of solutions (best solutions) obtained by performing the process in a plurality of times. In a case where the optimum solution may be obtained among the plurality of solutions (best solutions) obtained by performing the process in the plurality of times, based on the selection status 17 stored in the storage unit 12, the search unit 27 determines that the condition of the optimum solution of the optimization problem is satisfied.

As a search result, the output unit 28 outputs each second element specified by the selection status 17 of each bit specified by the search unit 27 to an external display monitor or the like via the communication unit 11.

[Flow of Processes]

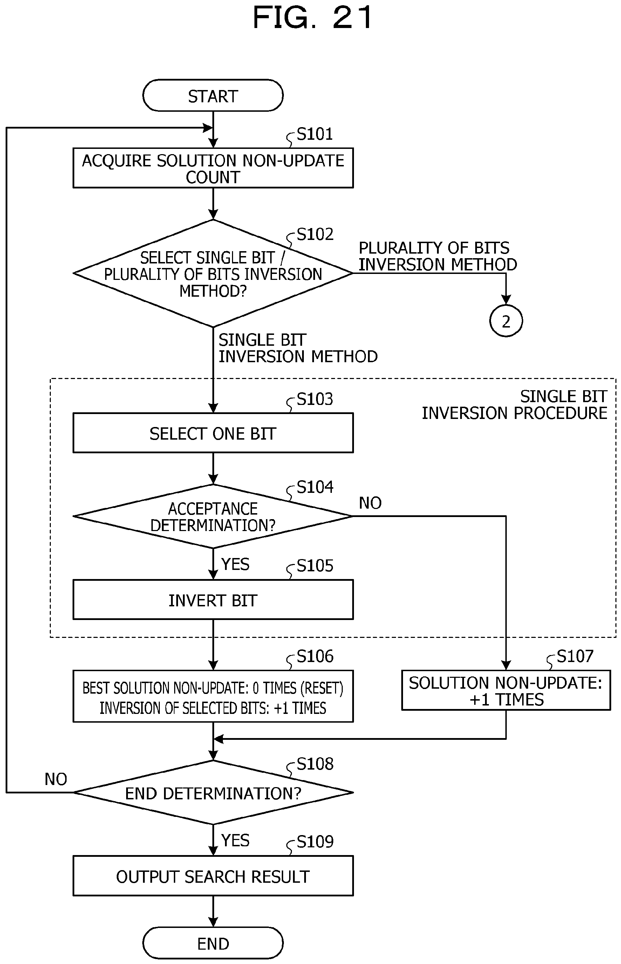

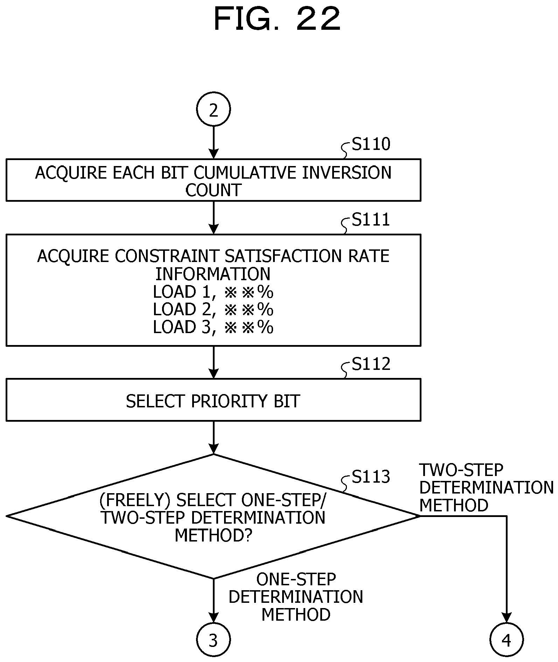

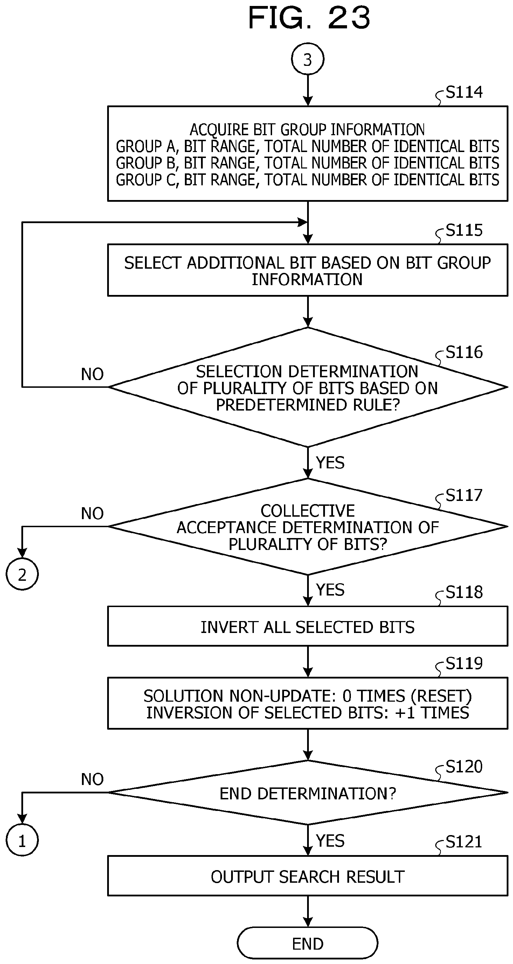

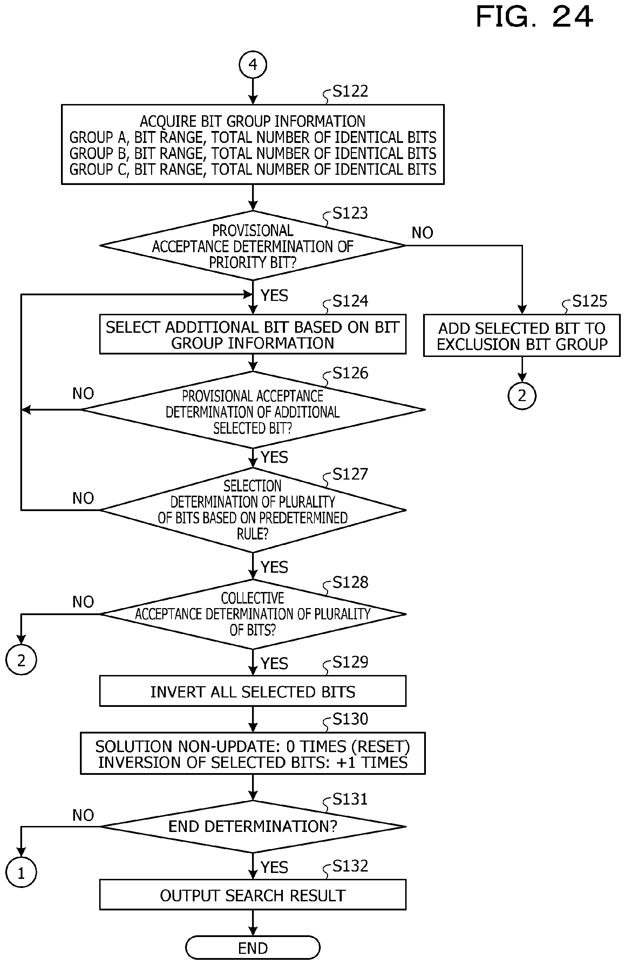

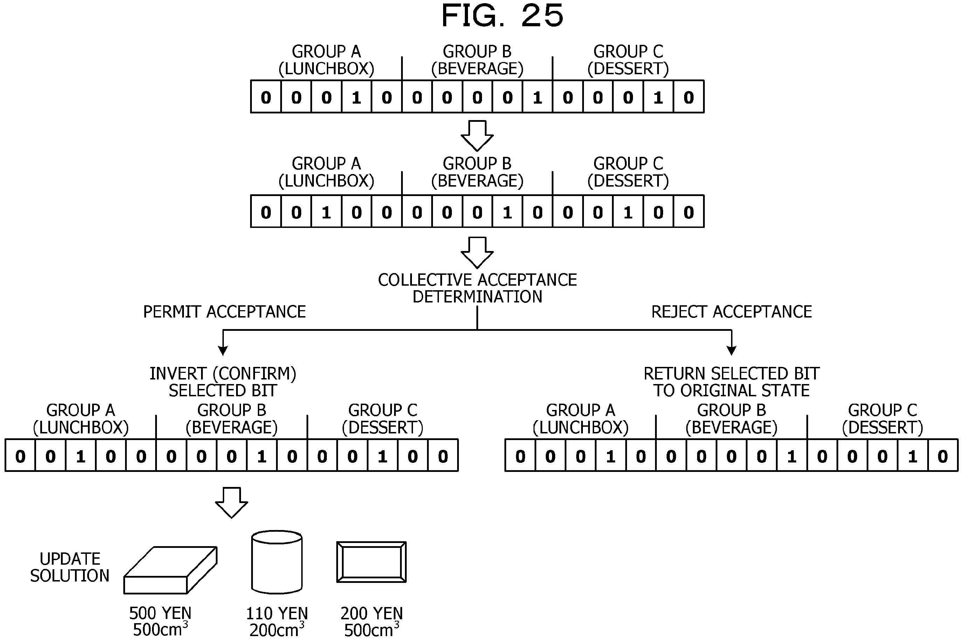

A flow of processes executed by the information processing apparatus 10 will be described. FIGs. 21 to 24 are flowcharts illustrating the flow of the processes. FIG. 25 is a diagram describing an optimum solution search.

As illustrated in FIGs. 21 to 24, first, the acquisition unit 21 acquires, from the storage unit 12, the solution non-update count 13 indicating the number of times that a solution is not updated when an optimum solution of a combination is searched while inverting a plurality of bits (step S101).

Subsequently, based on the solution non-update count 13 acquired by the acquisition unit 21, the selection unit 22 selects any one of a single bit inversion method and a plurality of bits inversion method (step S102). For example, the selection unit 22 determines whether or not the solution non-update count 13 acquired by the acquisition unit 21 exceeds a predetermined count, and selects the plurality of bits inversion method in a case where the solution non-update count 13 exceeds the predetermined count, and selects the single bit inversion method in a case where the solution non-update count 13 does not exceed the predetermined count. In a case where the selection unit 22 selects the single bit inversion method (single bit in step S102), the information processing apparatus 10 proceeds to step S103 to be described below. By contrast, in a case where the selection unit 22 selects the plurality of bits inversion method (plurality of bits in step S102), the information processing apparatus 10 proceeds to step S110 to be described below.

[General Single Bit Inversion Procedure]

At step S103, the selection unit 22 freely selects one bit among the plurality of bits. For example, the selection unit 22 freely selects one bit for predetermined bits among the plurality of bits.

Subsequently, the determination unit 23 performs acceptance determination of the bit freely selected by the selection unit 22 (step S104). For example, the determination unit 23 determines whether or not a value of the bit freely selected by the selection unit 22 is higher than a predetermined criterion value, and permits the acceptance determination to accept the bit freely selected by the selection unit 22 in a case where it is determined that the value of the bit is higher than the predetermined criterion value. By contrast, in a case where the determination unit 23 determines that the value of the bit is not higher than the predetermined criterion value, the determination unit 23 does not accept the acceptance determination to accept the bit freely selected by the selection unit 22. In a case where the determination unit 23 permits the acceptance determination of the bit freely selected by the selection unit 22 (Yes in step S104), the information processing apparatus 10 proceeds to step S105 to be described below. By contrast, in a case where the determination unit 23 rejects the acceptance determination of the bit freely selected by the selection unit 22 (No in step S104), the information processing apparatus 10 proceeds to step S107 to be described below.

At step S105, the inversion unit 24 inverts the bit freely selected by the selection unit 22. For example, the inversion unit 24 inverts the bit freely selected by the selection unit 22, for example, inverts "0" to "1".

Subsequently, the storage unit 25 resets a state of the solution non-update count 13 stored in the storage unit 12 to 0 times, and increments (+1) the number of times of inversion of the selected bit inverted by the inversion unit 24 from the current count of the each bit cumulative inversion count 14 stored in the storage unit 12 (step S106). After step S106, the information processing apparatus 10 proceeds to step S108 to be described below.

At step S107, the storage unit 25 updates the solution non-update count 13 stored in the storage unit 12 by incrementing (+1) the current count. After step S107, the information processing apparatus 10 proceeds to step S108 to be described below.

Subsequently, based on the selection status 17 of each bit information stored in the storage unit 12, the search unit 27 performs end determination (step S108). For example, based on the selection status 17 stored in the storage unit 12, the search unit 27 executes, as the end determination, determination of whether or not an optimum solution may be obtained among a plurality of solutions (best solutions) obtained by performing the process in a plurality of times. In this case, based on the selection status 17 stored in the storage unit 12, in a case where the optimum solution may be obtained among the plurality of solutions (best solutions) obtained by performing the process in the plurality of times, the search unit 27 performs the end determination for ending a target search of the optimum solution in the optimization problem by the information processing apparatus 10. Besides obtaining the optimum solution among the plurality of solutions (best solutions) obtained by performing the process in the plurality of times, the search unit 27 may perform end determination of performing any one or more of determination of whether or not the number of preset processes is reached and determination of whether or not a preset time period elapses. In a case where the search unit 27 permits the end determination (Yes in step S108), the information processing apparatus 10 proceeds to step S109 to be described below. By contrast, in a case where the search unit 27 rejects the end determination (No in step S108), the information processing apparatus 10 returns to step S101 to be described above.

At step S109, as a search result, the output unit 28 outputs each second element specified by the selection status 17 of each bit specified by the search unit 27 to an external display monitor or the like via the communication unit 11. After step S109, the information processing apparatus 10 ends the present process.

[Plurality of Bits Inversion Procedure]

At step S110, the acquisition unit 21 acquires the each bit cumulative inversion count 14 from the storage unit 12.

Subsequently, the acquisition unit 21 acquires the constraint satisfaction rate information 15 from the storage unit 12 (step S111).

After that, the selection unit 22 selects a priority bit among a plurality of bits from bit group information based on at least one of the each bit cumulative inversion count 14 and the constraint satisfaction rate information 15 (step S112). For example, based on at least one of the each bit cumulative inversion count 14 and the constraint satisfaction rate information 15, the selection unit 22 selects, as the priority bit, a bit captured in a local solution at least when searching for an optimum solution. For example, when selecting the plurality of bits from among the predetermined bits, the selection unit 22 selects the priority bit for preferentially incorporating a bit captured in the local solution as compared with other bits when searching for the optimum solution. For example, the selection unit 22 selects, as the priority bit, a bit that is difficult to be inverted as the bit captured in the local solution at least when searching for the optimum solution. For example, in a case of using the each bit cumulative inversion count 14 as a base, the selection unit 22 selects, as the priority bit, a bit corresponding to a bit having the small each bit cumulative inversion count 14. By contrast, in a case of using the constraint satisfaction rate information 15 as the base, the selection unit 22 selects, as the priority bit, a bit corresponding to a bit having a high constraint satisfaction rate for a capacity.

After that, the selection unit 26 selects any one of the one-step determination method and the two-step determination method (step S113). In this case, the selection unit 26 freely selects any one of the one-step determination method and the two-step determination method. With the one-step determination method, it is easier to get out of the local solution, and a probability of acceptance determination by the determination unit 23 decreases. With the two-step determination method, the probability of acceptance determination by the determination unit 23 is high, and it is difficult to get out of the local solution. For this reason, the selection unit 26 selects any one of the one-step determination method and the two-step determination method. For example, the selection unit 26 freely performs the selection such that the one-step determination method is selected once and the two-step determination method is selected twice, among three times, and is not limited thereto. In a case where the one-step determination is selected by the selection unit 26 (one-step determination method in step S113), the information processing apparatus 10 proceeds to step S114 to be described below. By contrast, in a case where the two-step determination is selected by the selection unit 26 (two-step determination method in step S113), the information processing apparatus 10 proceeds to step S122.

[One-step Determination Method]

At step S114, the acquisition unit 21 acquires the bit group information 16 stored in the storage unit 12. For example, the acquisition unit 21 acquires a bit range of each of the group A, the group B, and the group C, which are first elements of the bit group information 16 stored in the storage unit 12, and the same bit total number of each of the group A, the group B, and the group C.

Subsequently, the selection unit 22 selects an additional bit based on the bit group information 16 acquired by the acquisition unit 21 (step S115). For example, based on the bit group information 16 acquired by the acquisition unit 21, the selection unit 22 selects the additional bit for each first element different from the priority bit to be incorporated into a plurality of bits, together with the priority bit selected in step S111 described above. For example, as illustrated in FIG. 25, in a case where the priority bit selected in step S111 described above is any one of the group A (lunchbox), the selection unit 22 selects one bit, which is a second element, from each of the group B (beverage) and the group C (dessert) as the additional bit. In this case, the selection unit 22 selects at least one bit from each of the group B (beverage) and the group C (dessert) as the additional bit (for example, selects 6 bits in total) such that the number of bits is equal to or less than twice the total number of bits (a set of "0" and "1") defined under the constraint condition for optimization. For example, as illustrated in FIG. 25, the selection unit 22 selects one bit from each of at least the group B (beverage) and the group C (dessert) as the additional bit. The case where the number of bits equal to or less than twice the total number of bits defined under the constraint condition for optimization includes a case where the selection unit 22 does not select the group C (dessert) and "group A (lunchbox) + group B (beverage) = 2" when the constraint condition is "group A (lunchbox) + group B (beverage) + group C (dessert) = 3". For example, the selection unit 22 may select 4 bits in total of 2 bits of "1" and "0" in the group A (lunchbox) and 2 bits of "1" and "0" in the group B (beverage).

After that, the determination unit 23 performs selection determination of the plurality of bits based on a predetermined rule selected by the selection unit 22 (step S116). For example, the determination unit 23 determines whether or not the plurality of bits selected by the selection unit 22 are selected so as to satisfy 6 bits in total including one bit from each of the group A to the group C. In a case where the determination unit 23 permits the selection determination of the plurality of bits based on the predetermined rule selected by the selection unit 22 (Yes in step S116), the information processing apparatus 10 proceeds to step S117 to be described below. By contrast, in a case where the determination unit 23 rejects the selection determination of the plurality of bits based on the predetermined rule selected by the selection unit 22 (No in step S116), the information processing apparatus 10 returns to step S115 described above. In this case, the inversion unit 24 executes inversion control of returning the additional bit to a state before the selection determination of accepting a selection state of the additional bit while maintaining a selection state of the priority bit in the plurality of bits. For example, the inversion unit 24 executes inversion control of resetting the selection states of the group B and the group C which are the additional bits while maintaining the selection state of the bit of the group A that is the priority bit, among the group A to the group C selected by the selection unit 22.

At step S117, the determination unit 23 performs collective acceptance determination for the plurality of bits. In a case where the determination unit 23 permits the collective acceptance determination of the plurality of bits (Yes in step S117), the inversion unit 24 inverts all the bits for the plurality of bits selected by the selection unit 22 (step S118). For example, as illustrated in FIG. 25, in a case where the collective acceptance determination of the plurality of bits is permitted by the determination unit 23, the inversion unit 24 inverts (confirms) all the bits for the plurality of bits selected by the selection unit 22. After step S118, the information processing apparatus 10 proceeds to step S119 to be described below. By contrast, in a case where the determination unit 23 rejects the collective acceptance determination for the plurality of bits (No in step S117), the information processing apparatus 10 returns to step S110 described above. In this case, as illustrated in FIG. 25, the inversion unit 24 executes inversion control of returning the plurality of bits selected by the selection unit 22 to the original state.

At step S119, the storage unit 25 resets a state of the solution non-update count 13 stored in the storage unit 12 to 0 times, and increments (+1) the number of times of inversion of the selected bit inverted by the inversion unit 24 from the current count of the each bit cumulative inversion count 14 stored in the storage unit 12.

Subsequently, based on the selection status 17 of each bit information in the bit group information 16 stored in the storage unit 12, the search unit 27 performs end determination of ending the search for the optimum solution of the optimization problem (step S120). For example, based on the selection status 17 stored in the storage unit 12, the search unit 27 executes, as the end determination, determination of whether or not an optimum solution may be obtained among a plurality of solutions (best solutions) obtained by performing the process in a plurality of times. In this case, based on the selection status 17 stored in the storage unit 12, in a case where the optimum solution may be obtained among the plurality of solutions (best solutions) obtained by performing the process in the plurality of times, the search unit 27 permits the end determination for ending a target search of the optimum solution in the optimization problem by the information processing apparatus 10. In a case where the end determination for searching for the optimum solution of the optimization problem by the search unit 27 is permitted (Yes in step S120), the information processing apparatus 10 proceeds to step S121 to be described below. By contrast, in a case where the search unit 27 rejects the end determination (No in step S120), the information processing apparatus 10 returns to step S101 described above. In this case, the information processing apparatus 10 may execute the end determination by the search unit 27 after executing a series of processes including each process in steps S110 to S119 described above a plurality of times.

At step S121, as a search result, the output unit 28 outputs each second element specified by the selection status 17 of each bit specified by the search unit 27 to an external display monitor or the like via the communication unit 11. After step S121, the information processing apparatus 10 ends the present process.

[Two-step Determination Method]

At step S122, the acquisition unit 21 acquires the bit group information 16 from the storage unit 12. For example, the acquisition unit 21 acquires a bit range of each of the group A, the group B, and the group C of the bit group information 16 stored in the storage unit 12, and the same bit total number of each of the group A, the group B, and the group C.

Subsequently, the determination unit 23 performs provisional acceptance determination on the priority bit selected by the selection unit 22 (step S123). For example, the determination unit 23 performs the provisional acceptance determination of determining whether or not a value of the priority bit selected by the selection unit 22 is equal to or more than a predetermined criterion. In a case where the value of the priority bit selected by the selection unit 22 is equal to or more than the predetermined criterion, the determination unit 23 permits the provisional acceptance determination of the priority bit selected by the selection unit 22. By contrast, in a case where the value of the priority bit selected by the selection unit 22 is not equal to or more than the predetermined criterion, the determination unit 23 rejects the provisional acceptance determination of the priority bit selected by the selection unit 22. In a case where the provisional acceptance determination of the priority bit is permitted by the determination unit 23 (Yes in step S123), the information processing apparatus 10 proceeds to step S124 to be described below. By contrast, in a case where the determination unit 23 rejects the provisional acceptance determination of the priority bit (No in step S123), the inversion unit 24 adds the priority bit of the selected bit to an exclusion bit group (step S125). After step S125, the information processing apparatus 10 returns to step S110 described above. In this case, the inversion unit 24 executes inversion control of returning a selection state of the priority bit to a state before the provisional acceptance determination. For example, the inversion unit 24 resets a selection state of the bit of the group A, which is the priority bit selected by the selection unit 22, to a state before the selection state.

At step S124, the selection unit 22 performs additional bit selection based on the bit group information 16. For example, by performing a process in the same manner as step S115 described above, the selection unit 22 provisionally selects an additional bit for each first element different from the priority bit to be incorporated into the plurality of bits together with the priority bit selected in step S112 described above, based on the bit group information 16 acquired by the acquisition unit 21. After step S124, the information processing apparatus 10 proceeds to step S126 to be described below.

At step S126, the determination unit 23 performs provisional acceptance determination of the additional selected bit (additional bit) for each first element selected by the selection unit 22. In a case where the determination unit 23 permits the provisional acceptance determination of the additional selected bit selected by the selection unit 22 (Yes in step S126), the information processing apparatus 10 proceeds to step S127 to be described below. By contrast, in a case where the determination unit 23 rejects the provisional acceptance determination for the additional selected bit selected by the selection unit 22 (No in step S126), the information processing apparatus 10 returns to step S124 described above. In this case, the inversion unit 24 executes inversion control of returning the additional bit to a state before the selection determination of provisionally accepting a selection state of the additional bit for each first element while maintaining a selection state of the priority bit in the plurality of bits. For example, the inversion unit 24 maintains the selection state of the bit of the group A, which is the priority bit, among the groups A to C selected by the selection unit 22, and resets the selection state of the additional bit to a state before the selection state before the provisional acceptance determination of the additional selected bit for each group B or each group C. For example, the information processing apparatus 10 resets the selection state of the additional bit to the state before the selection state before the provisional acceptance determination of the additional selected bit, for each first element for which the provisional acceptance determination is rejected, for example, for each group C, and repeats the provisional acceptance determination of the additional selected bit until selection of the additional bit for each of all the first elements is provisionally accepted.

At step S127, the determination unit 23 performs selection determination of the plurality of bits based on a predetermined rule selected by the selection unit 22. For example, the determination unit 23 determines whether or not the total number of bits is 6 bits in total including 2 bits associated with putting-in and taking-out of lunchbox in the group A of the priority bit, 2 bits associated with putting-in and taking-out of beverage in the group B of the additional bit, and 2 bits associated with putting-in and taking-out of dessert in the group C of the additional bit. For example, the determination unit 23 determines whether or not the total number of bits of the priority bit and the additional bit is 6 bits by repeating the provisional acceptance determination in steps S123 to S126 described above, for each first element. For example, the determination unit 23 gathers the priority bit of the group A, the additional bit of the group B, and the additional bit of the group C for every 2 bits, and performs the selection determination until the total number of bits becomes 6 bits. In a case where the determination unit 23 permits the selection determination of the plurality of bits based on the predetermined rule selected by the selection unit 22 (Yes in step S127), the information processing apparatus 10 proceeds to step S128 to be described below. By contrast, in a case where the determination unit 23 rejects the selection determination for the plurality of bits based on the predetermined rule selected by the selection unit 22 (No in step S127), the information processing apparatus 10 returns to step S124 described above.

At step S128, the determination unit 23 performs collective acceptance determination for the plurality of bits. In a case where the determination unit 23 permits the collective acceptance determination for the plurality of bits (Yes in step S128), the information processing apparatus 10 proceeds to step S129 to be described below. By contrast, in a case where the determination unit 23 rejects the collective acceptance determination for the plurality of bits (No in step S128), the information processing apparatus 10 returns to step S110 described above.

At step S129, the inversion unit 24 inverts all the bits, among the plurality of bits selected by the selection unit 22.

Subsequently, the storage unit 25 resets a state of the solution non-update count 13 stored in the storage unit 12 to 0 times, and increments (+1) the number of times of inversion of the selected bit inverted by the inversion unit 24 from the current count of the each bit cumulative inversion count 14 stored in the storage unit 12 (step S130).

After that, based on the selection status 17 of each bit information in the bit group information 16 stored in the storage unit 12, the search unit 27 performs end determination of ending the search for the optimum solution of the optimization problem (step S131). In a case where the search unit 27 permits the end determination (Yes in step S131), the information processing apparatus 10 proceeds to step S132 to be described below. By contrast, in a case where the search unit 27 rejects the end determination (No in step S131), the information processing apparatus 10 returns to step S101 described above.

At step S132, as a search result, the output unit 28 outputs each second element specified by the selection status 17 of each bit specified by the search unit 27 to an external display monitor or the like via the communication unit 11.

[Effects]

According to the embodiment described above, the information processing apparatus 10 selects a plurality of bits based on a constraint condition of an optimization problem, from bit group information related to bit information indicating whether or not each second element included in each first element is selected, for each first element which is a search target of an optimum solution in the optimization problem. After that, the information processing apparatus 10 executes acceptance determination of the selection of the plurality of bits, and executes, for the plurality of bits, inversion control of inverting the plurality of bits in the bit group information in a case where the selection of the plurality of bits is accepted, and returning the plurality of bits in the bit group information to a state before the acceptance determination in a case where the selection of the plurality of bits is not accepted. Subsequently, based on a selection status of each bit information in the bit group information, the information processing apparatus 10 searches for the optimum solution of the optimization problem. Accordingly, it is possible to make an energy mountain of the minimization problem low or make an energy valley of the maximization problem shallow, and it is possible to suppress a situation in which the optimum solution is not reached while being captured by a local solution. Since it is not desirable to exceed a large mountain of energy, it is possible to make a criterion for acceptance determination strict, and it is possible to suppress divergence greatly deviating from an original solution. As a result, it is possible to reduce a time until the optimum solution is reached.

It is noted that each component of each apparatus illustrated in the drawings may not be physically configured as illustrated in the drawings. For example, specific forms of the separation and integration of each apparatus are not limited to those illustrated in the drawings. The entirety or part of the apparatus may be configured by functionally or physically separating into arbitrary units or integrating into an arbitrary unit in accordance with various loads, usage situations, and the like.

All or certain some of the various processing functions to be executed by the information processing apparatus 10 may be executed by a CPU (or a microcomputer such as an MPU or a micro controller unit (MCU)). Of course, all or arbitrary subset of the various processing functions may be executed in programs analyzed and executed by the CPU (or a microcomputer such as the MPU or MCU) or in hardware using wired logic. The various processing functions performed in the information processing apparatus 10 may be executed in such a way that a plurality of computers cooperate with each other via cloud computing.

[Hardware]

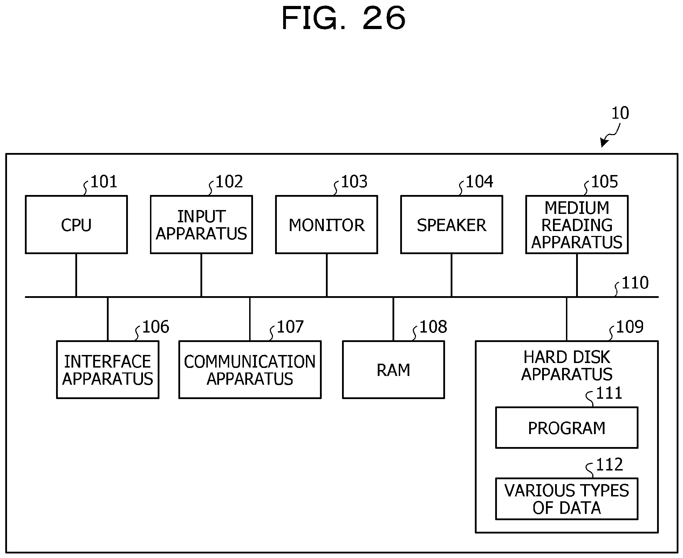

The various processes described according to the above-described embodiment may be realized when the computer executes a program prepared in advance. Hereinafter, an example of the configuration of the computer (hardware) that executes the program having functions in the same manner as those of the above-described embodiment will be described. FIG. 26 is a diagram describing an example of a hardware configuration.

As illustrated in FIG. 26, the information processing apparatus 10 includes a CPU 101 for executing various arithmetic processes, an input apparatus 102 for accepting input data, a monitor 103, and a speaker 104. The information processing apparatus 10 also includes a medium reading apparatus 105 for reading a program and the like from a storage medium, an interface apparatus 106 for coupling to various apparatuses, and a communication apparatus 107 that communicates with and is coupled to an external device via a cable or wirelessly. The information processing apparatus 10 includes a RAM 108 that temporarily stores various types of information, and a hard disk apparatus 109. Each unit in the information processing apparatus 10 is coupled to the bus 110.

A program 111 for executing various types of processes in the acquisition unit 21, the selection unit 22, the determination unit 23, the inversion unit 24, the storage unit 25, the selection unit 26, and the like described in the above embodiment is stored in a hard disk apparatus 109. Various types of data 112 to be referenced by the program 111 are stored in the hard disk apparatus 109. The input apparatus 102 accepts operation information input from an operator, for example. The monitor 103 displays various screens to be operated by the operator, for example. The interface apparatus 106 is coupled to a printing apparatus or the like, for example. The communication apparatus 107 is coupled to a communication network, such as a local area network (LAN), and communicates various information with an external device via the communication network.

The CPU 101 reads the program 111 stored in the hard disk apparatus 109, develops the program 111 into the RAM 108, and executes the program 111 so as to perform various types of processes related to the acquisition unit 21, the selection unit 22, the determination unit 23, the inversion unit 24, the storage unit 25, the selection unit 26, and the like. The program 111 may not be stored in the hard disk apparatus 109. For example, the information processing apparatus 10 may read and execute the program 111 stored in a readable storage medium. The storage medium readable by the information processing apparatus 10 corresponds to, for example, a portable recording medium such as a compact disc read-only memory (CD-ROM), a Digital Versatile Disc (DVD), or Universal Serial Bus (USB) memory, a semiconductor memory such as flash memory, a hard disk drive, or the like. The program 111 may be stored in an apparatus coupled to a public line, the Internet, a LAN, or the like, and the information processing apparatus 10 may read the program 111 from the apparatus and execute the program 111.

**Claims**

1. An optimization program that causes at least one computer to execute a process, the process comprising:

   selecting a plurality of bits based on a constraint condition of an optimization problem for each of a plurality of first elements that are search targets of a solution for the optimization problem, from bit group information indicating whether each of a plurality of second elements included in each of the plurality of first elements are selected to be used for searching for the solution of the optimization problem;
   determining whether to accept the selected plurality of bits based on a certain condition;
   when the selected plurality of bits are accepted, inverting the plurality of bits in the bit group information;
   when the selected plurality of bits are not accepted, inverting the plurality of bits to return to a state before the determining in the bit group information; and
   searching for the solution of the optimization problem based on a selection status of each of the plurality of bits in the bit group information.

2. The optimization program according to claim 1, wherein the searching includes:

   specifying a selection status satisfying a condition of the solution after a series of processes including the selecting, the determining, and the inverting are executed a plurality of times; and
   outputting each of the plurality of second elements specified based on the specified selection status as a search result.

3. The optimization program according to claim 1, wherein the searching includes:

   determining whether a selection status satisfies the condition of the solution for each time a series of processes including the selecting, the determining, and the inverting are executed;
   when the selection status satisfies the condition, outputting each of the plurality of second elements specified based on the specified selection status as a search result; and
   when the selection status does not satisfy the condition, repeating the series of processes.

4. The optimization program according to any one of claims 1 to 3, wherein the selecting includes:

   selecting a first bit from the bit group information based on at least one selected from a constraint satisfaction rate and a cumulative number of times of inversion; and
   selecting a second bit for each of the plurality of first elements different from a first element including the first bit, wherein
   the determining includes:

      determining whether to accept first bit and the second bit based on a certain condition;
      when the first bit and the second bit are accepted, inverting the first bit and the second bit in the bit group information; and
      when the first bit and the second bit are not accepted, inverting the first bit and the second bit to return to a state before the determining in the bit group information.

5. The optimization program according to any one of claims 1 to 3, wherein the selecting includes

   selecting a first bit from the bit group information based on at least one selected from a constraint satisfaction rate and a cumulative number of times of inversion; and
   selecting a second bit for each of the plurality of first elements different from a first element including the first bit, wherein
   the determining includes determining whether to exclude the first bit and the second bit from being used for searching for the solution of the optimization problem based on the certain condition.

6. The optimization program according to claim 4 or 5,
   wherein the selecting the first bit includes selecting the first bit that derives a local solution of the optimization problem by being inverted.

7. The optimization program according to any one of claims 1 to 6,

wherein the first element is a set of bits whose total number of bits that have identical states under the constraint condition is set.

8. The optimization program according to any one of claims 1 to 7,
wherein a number of the plurality of bits is equal to or less than twice a total number of bits defined under the constraint condition.

9. An optimization method for a computer to execute a process comprising:

selecting a plurality of bits based on a constraint condition of an optimization problem for each of a plurality of first elements that are search targets of a solution for the optimization problem, from bit group information indicating whether each of a plurality of second elements included in each of the plurality of first elements are selected to be used for searching for the solution of the optimization problem;
determining whether to accept the selected plurality of bits based on a certain condition;
when the selected plurality of bits are accepted, inverting the plurality of bits in the bit group information;
when the selected plurality of bits are not accepted, inverting the plurality of bits to return to a state before the determining in the bit group information; and
searching for the solution of the optimization problem based on a selection status of each of the plurality of bits in the bit group information.

10. An optimization device comprising:

a selection unit that selects a plurality of bits based on a constraint condition of an optimization problem for each of a plurality of first elements that are search targets of a solution for the optimization problem, from bit group information indicating whether each of a plurality of second elements included in each of the plurality of first elements are selected to be used for searching for the solution of the optimization problem;
a determination unit that determines whether to accept the selected plurality of bits based on a certain condition; and
a searching unit that

when the selected plurality of bits are accepted, invert the plurality of bits in the bit group information,
when the selected plurality of bits are not accepted, invert the plurality of bits to return to a state before the determining in the bit group information, and
search for the solution of the optimization problem based on a selection status of each of the plurality of bits in the bit group information.

# FIG. 1

EP 4 105 841 A1

# FIG. 2

B1
190000 YEN
3600 cm³  ) 53 YEN/cm³

B5
(10000 YEN
200 cm³ ) 50 YEN/cm³

B2
80000 YEN
1800 cm³  ) 44 YEN/cm³

B3
70000 YEN
1600 cm³  ) 44 YEN/cm³

B4
60000 YEN
1400 cm³  ) 43 YEN/cm³

F1
CAPACITY 4800 cm³
OR LESS

INITIAL SOLUTION

F1
B1
190000 YEN
3600 cm³
10000 YEN
200 cm³
B5

CAPACITY: 3800 cm³
VALUE: 200000 YEN

OPTIMUM SOLUTION

F2
B3
70000 YEN
1600 cm³
B2
80000 YEN
1800 cm³
60000 YEN
1400 cm³
B4

CAPACITY: 4800 cm³
VALUE: 210000 YEN

EP 4 105 841 A1

# FIG. 3

```
                        ┌──────────────┐
                        │    START     │
                        └──────┬───────┘
                               │                        ⌐S1
    ┌────────────────┐  ┌──────▼──────────────────────────────┐
    │                │  │      FREELY SELECT ONE BIT           │
    │                │  └──────┬──────────────────────────────┘
    │                │         │
    │                │         │                          ⌐S2
    │         NO      ◄────────<  ACCEPTANCE DETERMINATION?  >
    │                │         │
    │                │         │ YES                       ⌐S3
    │                │  ┌──────▼──────────────────────────────┐
    │                │  │       INVERT SELECTED BIT            │
    │                │  └──────┬──────────────────────────────┘
    │                │         │
    │         NO      ◄────────<    END DETERMINATION?    >    ⌐S4
    │                │         │
    └────────────────┘         │ YES
                        ┌──────▼───────┐
                        │     END      │
                        └──────────────┘
```

# FIG. 4

# FIG. 5

**GROUP A**

| 650 YEN 600cm³ | 600 YEN 550cm³ | 500 YEN 500cm³ | 400 YEN 450cm³ | 300 YEN 400cm³ |
|---|---|---|---|---|
| B11 | B12 | B13 | B14 | B15 |

**GROUP B**

| B21 | B22 | B23 | B24 | B25 |
|---|---|---|---|---|
| 120 YEN 250cm³ | 110 YEN 200cm³ | 90 YEN 150cm³ | 70 YEN 100cm³ | 50 YEN 50cm³ |

**GROUP C**

| B31 | B32 | B33 | B34 | B35 |
|---|---|---|---|---|
| 280 YEN 700cm³ | 250 YEN 600cm³ | 200 YEN 500cm³ | 150 YEN 400cm³ | 100 YEN 300cm³ |

**PROBLEM** F2

CAPACITY 1200 cm³ OR LESS

**OPTIMUM SOLUTION** F2

650 YEN 600cm³ — B11

200 YEN 500cm³ — B33

B24 70 YEN 100cm³

CAPACITY: 1200 cm³
VALUE: 920 YEN

# FIG. 6

**A GROUP**

- 600 YEN / 550cm³ — B12 — 1.09 YEN /cm³
- 650 YEN / 600cm³ — B11 — 1.08 YEN /cm³
- 500 YEN / 500cm³ — B13 — 1.00 YEN/cm³
- 400 YEN / 450cm³ — B14 — 0.89 YEN/cm³
- 300 YEN / 400cm³ — B15 — 0.75 YEN/cm³

**B GROUP**

- 50 YEN / 50cm³ — 1.00 YEN /cm³ — B25
- 70 YEN / 100cm³ — 0.70 YEN /cm³ — B24
- 90 YEN / 150cm³ — 0.60 YEN /cm³ — B23
- 110 YEN / 200cm³ — 0.55 YEN /cm³ — B22
- 120 YEN / 250cm³ — 0.48 YEN /cm³ — B21

**C GROUP  G**

- 250 YEN / 600cm³ — B32 — 0.42 YEN/cm³
- 280 YEN / 700cm³ — B31 — 0.40 YEN/cm³
- 200 YEN / 500cm³ — B33 — 0.40 YEN/cm³
- 150 YEN / 400cm³ — B34 — 0.38 YEN/cm³
- 100 YEN / 300cm³ — B35 — 0.33 YEN/cm³

F2 — CAPACITY 1200 cm³ OR LESS

**INITIAL SOLUTION** F2

- B12 — 600 YEN / 550cm³
- B25 — 50 YEN / 50cm³
- B32 — 250 YEN / 600cm³

CAPACITY: 1200 cm³
VALUE: 900 YEN

**OPTIMUM SOLUTION** F2

- B11 — 650 YEN / 600cm³
- B24 — 70 YEN / 100cm³
- B33 — 200 YEN / 500cm³

CAPACITY: 1200 cm³
VALUE: 920 YEN

EP 4 105 841 A1

# FIG. 7

# FIG. 8

| | | | | | | | |
|---|---|---|---|---|---|---|---|
| 0 | 0 | 0 | 0 | 0 | 0 | 0 | 0 |

| | | | | | | | |
|---|---|---|---|---|---|---|---|
| 0 | 0 | 0 | 0 | 0 | 0 | 0 | 1 |

| | | | | | | | |
|---|---|---|---|---|---|---|---|
| 0 | 0 | 0 | 0 | 0 | 0 | 1 | 0 |

...

| | | | | | | | |
|---|---|---|---|---|---|---|---|
| 1 | 1 | 1 | 1 | 1 | 1 | 1 | 0 |

| | | | | | | | |
|---|---|---|---|---|---|---|---|
| 1 | 1 | 1 | 1 | 1 | 1 | 1 | 1 |

PROBLEM

ANSWER IS 16

OPTIMUM SOLUTION

| | | | | | | | |
|---|---|---|---|---|---|---|---|
| 0 | 0 | 0 | 1 | 0 | 0 | 0 | 0 |

NUMERICAL VALUE: 16

EP 4 105 841 A1

# FIG. 9

INITIAL SOLUTION

ANSWER IS 16

```
0 0 0 0 0 0 0
0 0 0 0 0 0 1
0 0 0 0 0 1 0
...
1 1 1 1 1 1 0
1 1 1 1 1 1 1
```

| 0 | 0 | 0 | 0 | 0 | 0 | 0 |

NUMERICAL VALUE: 0

OPTIMUM SOLUTION

| 0 | 0 | 0 | 1 | 0 | 0 | 0 |

NUMERICAL VALUE: 16

EP 4 105 841 A1

# FIG. 10

```
                    ┌──────────────┐
                    │    START     │
                    └──────┬───────┘
                           │
    ┌──────────────────────┼──────────────────────┐ S11
    │         ┌────────────▼────────────────┐      │
    │         │   FREELY SELECT ONE BIT     │      │
    │         └────────────┬────────────────┘      │
    │                      │                        │
    │              NO      ▼            S12         │
    │         ◄────────────────────────────────    │
    │              ACCEPTANCE DETERMINATION?        │
    │                      │                        │
    │                      │ YES          S13       │
    │         ┌────────────▼────────────────┐      │
    │         │     INVERT SELECTED BIT     │      │
    │         └────────────┬────────────────┘      │
    │              NO      ▼            S14         │
    └─────────────────────────────────────────     │
                   END DETERMINATION?
                          │
                          │ YES
                    ┌─────▼────────┐
                    │     END      │
                    └──────────────┘
```

# FIG. 11

# FIG. 12

START

S21
SELECT BIT TO BE INVERTED BASED ON CERTAIN RULE

S22
NO ← ACCEPTANCE DETERMINATION?

YES    S23
COLLECTIVELY INVERT PLURALITY OF BITS

S24
NO    END DETERMINATION?

YES
END

# FIG. 13

# FIG. 14

|  | LUNCHBOX B11 | LUNCHBOX B12 | LUNCHBOX B13 | LUNCHBOX B14 | LUNCHBOX B15 |
|---|---|---|---|---|---|

EACH LUNCHBOX (SECOND ELEMENT)

| 650 YEN $600cm^3$ | 600 YEN $550cm^3$ | 500 YEN $500cm^3$ | 400 YEN $450cm^3$ | 300 YEN $400cm^3$ |
|---|---|---|---|---|

**GROUP A (LUNCHBOX) (FIRST ELEMENT)**

| 0 | 0 | 0 | 0 | 0 |
|---|---|---|---|---|

⇩ PUT IN LUNCHBOX B12

**INITIAL SOLUTION**

| 0 | 1 | 0 | 0 | 0 |
|---|---|---|---|---|

⇩ TAKE OUT LUNCHBOX B12 → 1-BIT INVERSION
PUT IN LUNCHBOX B11 → 1-BIT INVERSION

**MULTI-BIT INVERSION (PLURALITY OF BITS COLLECTIVE INVERSION)**

| 1 | 0 | 0 | 0 | 0 |
|---|---|---|---|---|

EP 4 105 841 A1

# FIG. 15

# FIG. 16

# FIG. 17

SELECTED BIT

| 0 | 0 | 0 | **0** | 1 | 1 | 1 | 1 |
|---|---|---|---|---|---|---|---|

BITS OF LOWER DIGITS

SET SELECTED BIT TO 1

| 0 | 0 | 0 | **1** | 0 | 0 | 0 | 0 |
|---|---|---|---|---|---|---|---|

SET ALL BITS IN LOWER DIGITS TO 0

# FIG. 18

INFORMATION PROCESSING APPARATUS ⟨10

CONTROL UNIT ⟨20

ACQUISITION UNIT ⟨21

SELECTION UNIT ⟨22

DETERMINATION UNIT ⟨23

INVERSION UNIT ⟨24

STORAGE UNIT ⟨25

SELECTION UNIT ⟨26

SEARCH UNIT ⟨27

OUTPUT UNIT ⟨28

COMMUNICATION UNIT ⟨11

STORAGE UNIT ⟨12

SOLUTION NON-UPDATE COUNT ⟨13

EACH BIT CUMULATIVE INVERSION COUNT ⟨14

CONSTRAINT SATISFACTION RATE INFORMATION ⟨15

BIT GROUP INFORMATION ⟨16

SELECTION STATUS ⟨17

# FIG. 19

CAPACITY
CONSTRAINT: 4800 cm$^3$  F1

B1

10000 YEN
200 cm$^3$

B3

190000 YEN
3600 cm$^3$

CONSTRAINT SATISFACTION RATE
3600cm$^3$: 75%
200cm$^3$: 4%

# FIG. 20

GROUP A
(LUNCHBOX)

GROUP B
(BEVERAGE)

GROUP C
(DESSERT)

| 0 | 0 | 1 | 0 | 0 | 0 | 1 | 0 | 0 | 0 | 1 | 0 | 0 | 0 | 0 |

GROUP A IS SET IN WHICH
TOTAL NUMBER OF BITS
HAVING STATE OF 1 IS 1

# FIG. 21

```
                          ┌─────────────┐
                          │    START    │
                          └──────┬──────┘
                                 │
                                 ▼                    ⌐S101
                    ┌─────────────────────────────┐
                    │ ACQUIRE SOLUTION NON-UPDATE  │
                    │           COUNT              │
                    └──────────────┬──────────────┘
                                   │
                                   ▼              ⌐S102
                          ╱─────────────────╲          PLURALITY OF BITS
                        ╱  SELECT SINGLE BIT /  ╲       INVERSION METHOD
                       ╱  PLURALITY OF BITS INVERSION ╲─────────────────►  ( 2 )
                        ╲      METHOD?      ╱
                          ╲───────┬───────╱
                                  │ SINGLE BIT
                                  │ INVERSION METHOD
```

SINGLE BIT INVERSION PROCEDURE

S103  SELECT ONE BIT

S104  ACCEPTANCE DETERMINATION?   NO

YES   S105  INVERT BIT

S106  BEST SOLUTION NON-UPDATE: 0 TIMES (RESET) INVERSION OF SELECTED BITS: +1 TIMES

S107  SOLUTION NON-UPDATE: +1 TIMES

S108  END DETERMINATION?   NO

YES   S109  OUTPUT SEARCH RESULT

END

39

# FIG. 22

(2)

S110
ACQUIRE EACH BIT CUMULATIVE INVERSION COUNT

S111
ACQUIRE CONSTRAINT SATISFACTION RATE INFORMATION
LOAD 1, ※※%
LOAD 2, ※※%
LOAD 3, ※※%

S112
SELECT PRIORITY BIT

S113
(FREELY) SELECT ONE-STEP/ TWO-STEP DETERMINATION METHOD?

TWO-STEP DETERMINATION METHOD

ONE-STEP DETERMINATION METHOD

(3)

(4)

# FIG. 23

③

ACQUIRE BIT GROUP INFORMATION
GROUP A, BIT RANGE, TOTAL NUMBER OF IDENTICAL BITS
GROUP B, BIT RANGE, TOTAL NUMBER OF IDENTICAL BITS
GROUP C, BIT RANGE, TOTAL NUMBER OF IDENTICAL BITS
— S114

SELECT ADDITIONAL BIT BASED ON BIT GROUP
INFORMATION
— S115

SELECTION DETERMINATION
OF PLURALITY OF BITS BASED ON
PREDETERMINED RULE?
— S116
NO

YES

COLLECTIVE
ACCEPTANCE DETERMINATION OF
PLURALITY OF BITS?
— S117
NO → ②

YES

INVERT ALL SELECTED BITS
— S118

SOLUTION NON-UPDATE: 0 TIMES (RESET)
INVERSION OF SELECTED BITS: +1 TIMES
— S119

END DETERMINATION?
— S120
NO → ①

YES

OUTPUT SEARCH RESULT
— S121

END

FIG. 24

④

ACQUIRE BIT GROUP INFORMATION ⌐S122
GROUP A, BIT RANGE, TOTAL NUMBER OF IDENTICAL BITS
GROUP B, BIT RANGE, TOTAL NUMBER OF IDENTICAL BITS
GROUP C, BIT RANGE, TOTAL NUMBER OF IDENTICAL BITS

PROVISIONAL ⌐S123
ACCEPTANCE DETERMINATION OF
PRIORITY BIT? — NO

YES

SELECT ADDITIONAL BIT BASED ON BIT ⌐S124
GROUP INFORMATION

ADD SELECTED BIT TO ⌐S125
EXCLUSION BIT GROUP

②

PROVISIONAL ACCEPTANCE ⌐S126
NO — DETERMINATION OF ADDITIONAL
SELECTED BIT?

YES

SELECTION ⌐S127
NO — DETERMINATION OF PLURALITY
OF BITS BASED ON PREDETERMINED
RULE?

YES

COLLECTIVE ⌐S128
NO — ACCEPTANCE DETERMINATION OF PLURALITY
OF BITS?

②

YES ⌐S129

INVERT ALL SELECTED BITS

⌐S130
SOLUTION NON-UPDATE: 0 TIMES (RESET)
INVERSION OF SELECTED BITS: +1 TIMES

⌐S131
NO — END DETERMINATION?

①

YES ⌐S132

OUTPUT SEARCH RESULT

END

# FIG. 25

| GROUP A (LUNCHBOX) | | | | GROUP B (BEVERAGE) | | | | | | GROUP C (DESSERT) | | | | |
|---|---|---|---|---|---|---|---|---|---|---|---|---|---|---|
| 0 | 0 | 0 | 1 | 0 | 0 | 0 | 0 | 0 | 1 | 0 | 0 | 0 | 1 | 0 |

⇩

| GROUP A (LUNCHBOX) | | | | GROUP B (BEVERAGE) | | | | | | GROUP C (DESSERT) | | | | |
|---|---|---|---|---|---|---|---|---|---|---|---|---|---|---|
| 0 | 0 | 1 | 0 | 0 | 0 | 0 | 0 | 1 | 0 | 0 | 0 | 1 | 0 | 0 |

⇩

COLLECTIVE ACCEPTANCE
DETERMINATION

PERMIT ACCEPTANCE        REJECT ACCEPTANCE

INVERT (CONFIRM) SELECTED BIT                     RETURN SELECTED BIT TO ORIGINAL STATE

| GROUP A (LUNCHBOX) | | | | GROUP B (BEVERAGE) | | | | | | GROUP C (DESSERT) | | | | |
|---|---|---|---|---|---|---|---|---|---|---|---|---|---|---|
| 0 | 0 | 1 | 0 | 0 | 0 | 0 | 0 | 1 | 0 | 0 | 0 | 1 | 0 | 0 |

| GROUP A (LUNCHBOX) | | | | GROUP B (BEVERAGE) | | | | | | GROUP C (DESSERT) | | | | |
|---|---|---|---|---|---|---|---|---|---|---|---|---|---|---|
| 0 | 0 | 0 | 1 | 0 | 0 | 0 | 0 | 0 | 1 | 0 | 0 | 0 | 1 | 0 |

⇩

UPDATE SOLUTION

500 YEN $500cm^3$     110 YEN $200cm^3$     200 YEN $500cm^3$

EP 4 105 841 A1

# FIG. 26

# EP 4 105 841 A1

Europäisches Patentamt
European Patent Office
Office européen des brevets

## EUROPEAN SEARCH REPORT

Application Number

EP 22 15 9675

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OYLUM \C{S}EKER ET AL: "Digital Annealer for quadratic unconstrained binary optimization: a comparative performance analysis", ARXIV.ORG, CORNELL UNIVERSITY LIBRARY, 201 OLIN LIBRARY CORNELL UNIVERSITY ITHACA, NY 14853, 22 December 2020 (2020-12-22), XP081844912, * abstract * * page 1, line 1 - page 26, last line * * page 37, line 1 - last line * ----- | 1-10 | INV. G06N5/00 G06N20/00 ADD. G06N7/00 |
| A | BAGHERBEIK MOHAMMAD ET AL: "A Permutational Boltzmann Machine with Parallel Tempering for Solving Combinatorial Optimization Problems", 31 August 2020 (2020-08-31), ARXIV.ORG, CORNELL UNIVERSITY LIBRARY, 201 OLIN LIBRARY CORNELL UNIVERSITY ITHACA, NY 14853, PAGE(S) 317 - 331, XP047560373, [retrieved on 2020-08-31] * abstract * * page 317, line 1 - page 329, last line * ----- | 1-10 | |
| A,D | JP 2019 016077 A (FUJITSU LTD) 31 January 2019 (2019-01-31) * abstract; claims 1-5; figures 1-16 * * paragraph [0001] - paragraph [0119] * & US 2019/012409 A1 (MATSUBARA SATOSHI [JP] ET AL) 10 January 2019 (2019-01-10) * abstract; claims 1-5; figures 1-16 * * paragraph [0002] - paragraph [0043] * * paragraph [0063] - paragraph [0147] * ----- -/-- | 1-10 | |

TECHNICAL FIELDS SEARCHED (IPC)

G06N

The present search report has been drawn up for all claims

| Place of search | Date of completion of the search | Examiner |
|---|---|---|
| The Hague | 22 August 2022 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

45

**EUROPEAN SEARCH REPORT**

Application Number

EP 22 15 9675

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | Shirai Tatsuhiko ET AL: "Multi-spin-flip engineering in an Ising machine", IEEE transactions on computers, 27 May 2022 (2022-05-27), pages 1-13, XP055953045, DOI: 10.1109/TC.2022.3178325 Retrieved from the Internet: URL:https://ieeexplore.ieee.org/ielx7/12/4 358213/09783142.pdf?tp=&arnumber=9783142&i snumber=4358213&ref=aHR0cHM6Ly9pZWVleHBsb3 JlLmllZWUub3JnL2Fic3RyYWN0L2RvY3VtZW50Lzk3 ODMxNDI= [retrieved on 2022-08-19] * abstract * * page 1, left-hand column, line 1 - page 11, left-hand column, last line * ----- | 1-10 | |
| T | MAYOWA AYODELE: "Comparing the Digital Annealer with Classical Evolutionary Algorithm", ARXIV.ORG, CORNELL UNIVERSITY LIBRARY, 201 OLIN LIBRARY CORNELL UNIVERSITY ITHACA, NY 14853, 3 June 2022 (2022-06-03), XP091238335, * abstract * * page 1, line 1 - page 15, line 5 * ----- | 1-10 | TECHNICAL FIELDS SEARCHED (IPC) |

The present search report has been drawn up for all claims

| Place of search | Date of completion of the search | Examiner |
|---|---|---|
| The Hague | 22 August 2022 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 105 841 A1

## ANNEX TO THE EUROPEAN SEARCH REPORT
## ON EUROPEAN PATENT APPLICATION NO.

EP 22 15 9675

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2022

| Patent document cited in search report | Publication date | Patent family member(s) | Publication date |
|---|---|---|---|
| JP 2019016077 A | 31-01-2019 | JP 6892599 B2 | 23-06-2021 |
| | | JP 2019016077 A | 31-01-2019 |
| | | US 2019012409 A1 | 10-01-2019 |

EPO FORM P0459

For more details about this annex : see Official Journal of the European Patent Office, No. 12/82

47

**EP 4 105 841 A1**

**REFERENCES CITED IN THE DESCRIPTION**

**Patent documents cited in the description**

- JP 2016103282 A

- JP 2019016077 A